# EUROPÄISCHE PATENTSCHRIFT

(11) **EP 0 807 490 B1**
(45) Veröffentlichungstag und Bekanntmachung des Hinweises auf die Patenterteilung: **20.11.2002**
(21) Anmeldenummer: 97107410.9
(22) Anmeldetag: 06.05.1997
(51) Int. Cl.: B23Q 39/04

(54) **Mehrspindeldrehmaschine**
Multiple-spindle lathe
Tour multibroche

(30) Priorität: 15.05.1996 DE 19619720
(43) Veröffentlichungstag der Anmeldung: 19.11.1997
(73) Patentinhaber: INDEX-WERKE GMBH & CO. KG HAHN & TESSKY, 73730 Esslingen (DE)
(72) Erfinder: Link, Helmut Friedrich, 73773 Aichwald (Schanbach) (DE)
(74) Vertreter: Hoeger, Stellrecht & Partner

(56) Entgegenhaltungen:
- DE-A- 1 602 949
- FR-A- 2 303 626

## Beschreibung

Die Erfindung betrifft eine Mehrspindeldrehmaschine umfassend ein Maschinengestell, eine relativ zum Maschinengestell um eine Trommelachse drehbar angeordnete Spindeltrommel mit einer Anzahl von bezogen auf die Trommelachse in definierten Winkelabständen angeordneten und bei einer Drehung der Spindeltrommel relativ zum Maschinengestell in einer Umlaufrichtung bewegbaren Werkstückspindeln, die jeweils mit einer Werkstückaufnahme für ein Werkstück versehen sind, und eine der Anzahl der Werkstückspindeln entsprechende Anzahl von am Maschinengestell in Umlaufrichtung der Werkstückspindeln aufeinanderfolgend angeordneten Stationen, die mindestens eine Bearbeitungsstation umfassen.

Derartige Mehrspindeldrehmaschinen sind aus dem Stand der Technik bekannt, z.B. DE 160 29 49A. Bei diesen Mehrspindeldrehmaschinen ist in jeder Station eine einzige Spindelposition vorgesehen, in welcher eine Bearbeitung oder eine Handhabung des Werkstückes erfolgt. Der Nachteil derartiger Mehrspindeldrehmaschinen ist darin zu sehen, daß die Zahl der in einer Bearbeitungsstation einsetzbaren Werkzeuge entweder begrenzt ist oder einen hohen mechanischen oder auch steuerungstechnischen Aufwand erfordert.

Der Erfindung liegt die Aufgabe zugrunde, eine Mehrspindeldrehmaschine der gattungsgemäßen Art derart zu verbessern, daß mit geringem Aufwand die Zahl der einsetzbaren Werkzeuge vergrößert werden kann.

Diese Aufgabe wird bei einer Mehrspindeldrehmaschine der eingangs beschriebenen Art erfindungsgemäß dadurch gelöst, daß mindestens eine Bearbeitungsstation zur Bearbeitung der Werkstücke eine erste und eine zweite Spindelposition aufweist, welche bezogen auf die Trommelachse in einem Winkelabstand voneinander angeordnet sind, daß die Spindeltrommel derart drehbar ist, daß in jeder der Spindelpositionen eine Werkstückspindel mit einem Werkstück positionierbar ist, und daß jeder Spindelposition mindestens ein eigenes Bearbeitungswerkzeug zugeordnet ist.

Der Vorteil der erfindungsgemäßen Lösung ist darin zu sehen, daß durch das Vorsehen zweier in Umlaufrichtung im Winkelabstand voneinander angeordneten Spindelpositionen eine einfache Möglichkeit geschaffen wurde, in der Bearbeitungsstation mindestens zwei Werkzeuge, nämlich jeweils mindestens eins in jeder Spindelposition, einzusetzen.

Mit dieser Lösung ist die Möglichkeit geschaffen, in der jeweiligen Bearbeitungsstation die doppelte Zahl von Werkzeugen einzusetzen, ohne daß ein hoher mechanischer Aufwand bei der Bereitstellung der Werkzeuge getrieben werden muß.

Die Vorteile der erfindungsgemäßen Lösung sind noch besser ausnutzbar, wenn mindestens zwei der Stationen als Bearbeitungsstationen mit jeweils einer ersten und einer zweiten Spindelposition ausgebildet sind.

Das erfindungsgemäße Konzept ist jedoch nicht nur auf zwei Spindelpositionen in der mindestens einen Bearbeitungsstation beschränkt, sondern umfaßt auch das Vorsehen von mehr als zwei Spindelpositionen in der Bearbeitungsstation.

Besonders vorteilhaft ist eine Lösung, bei welcher die an der Mehrspindeldrehmaschine vorhandenen Stationen entweder als Be- und/oder Entladestationen mit gegebenenfalls noch zusätzlicher Bearbeitung oder als Bearbeitungsstationen ausgebildet sind, so daß die durch die Anzahl der Stationen gegebenen Möglichkeiten optimal ausgenutzt werden.

Prinzipiell ist es im Rahmen der erfindungsgemäßen Lösung möglich, lediglich die mindestens eine Bearbeitungsstation mit der ersten und der zweiten Spindelposition zu versehen und die übrigen Stationen mit mindestens einer Spindelposition. In diesen Fällen ist es, insbesondere um möglichst geringe Stückzeiten und ein möglichst effektives Arbeiten der erfindungsgemäßen Mehrspindeldrehmaschine zu ermöglichen, vorteilhaft, wenn die übrigen Stationen mindestens eine Spindelposition aufweisen, welche entweder von der ersten oder der zweiten Spindelposition der mindestens einen Bearbeitungsstation einen Winkelabstand aufweisen, der einem ganzzahligen vielfachen von 360° geteilt durch die Anzahl der Werkstückspindeln entspricht. In diesem Fall besteht die Möglichkeit, daß bei einer in einer Spindelposition der mindestens einen Bearbeitungsstation stehender Werkstückspindel auch zumindest eine oder mehrere der anderen Werkstückspindeln in einer der Spindelpositionen der übrigen Stationen steht, in welcher beispielsweise entweder eine Handhabung oder eine Bearbeitung möglich ist.

Besonders vorteilhaft hinsichtlich der erzielbaren Stückzeiten ist es jedoch, wenn alle Stationen jeweils dieselbe Anzahl von Spindelpositionen aufweisen, so daß auch in den übrigen Stationen die Zahl der Möglichkeiten bei der Bearbeitung oder bei der Handhabung der Werkstücke verbessert wird.

Eine besonders vorteilhafte Lösung sieht dabei vor, daß die in Umlaufrichtung aufeinanderfolgenden ersten Spindelpositionen aller Stationen einen Winkelabstand von 360° geteilt durch die Anzahl der Werkstückspindeln aufweisen. Dabei ist die Möglichkeit geschaffen, in mehreren der ersten Spindelpositionen gleichzeitig ein Werkstück zu positionieren. Insbesondere ist es möglich, bei in gleichen Winkelabständen an der Spindeltrommel angeordneten Werkstückspindeln jeweils in jeder ersten Spindelposition aller Stationen ein Werkstück zu positionieren und dies wiederum dann zu erreichen, wenn eine Drehung der Spindeltrommel um einen Winkel von 360° geteilt durch die Anzahl der Werkstückspindeln erfolgt.

Alternativ oder ergänzend hierzu ist es ebenfalls möglich, daß die in Umlaufrichtung aufeinanderfolgenden zweiten Spindelpositionen aller Stationen einen Winkelabstand von 360° geteilt durch die Anzahl der Werkstückspindeln aufweisen. Damit sind ebenfalls die bereits vorstehend genannten Vorteile erreichbar, insbesondere bei in gleichem Winkelabstand voneinander an der Spindeltrommel angeordneten Werkstückspindeln.

Besonders vorteilhaft ist ein Ausführungsbeispiel, bei welchem sowohl die ersten Spindelpositionen aller Stationen als auch die zweiten Spindelpositionen aller Stationen und gegebenenfalls auch die weiteren Spindelpositionen aller Stationen, jeweils ein einem Winkelabstand von 360° geteilt durch die Anzahl der Werkstückspindeln angeordnet sind. In diesem Fall ist auch der Winkelabstand zwischen der ersten Spindelposition und den weiteren Spindelposition stets konstant. Damit ist sichergestellt, insbesondere bei in gleichem Winkelabstand voneinander angeordneten Werkstückspindeln, daß dann, wenn eine der Werkstückspindeln in einer der Spindelpositionen einer der Stationen steht auch zwangsläufig die anderen Werkstückspindeln in einer der Spindelpositionen der übrigen Stationen stehen.

Im Hinblick auf die Anordnung der der ersten und der zweiten Spindelpositionen der mindestens einen Bearbeitungsstation zugeordneten Werkzeuge wurden bislang keine näheren Angaben gemacht. Prinzipiell können die Werkzeuge so angeordnet sein, daß sie völlig unabhängig voneinander einsetzbar und bewegbar sind. Ein besonders vorteilhaftes Ausführungsbeispiel sieht vor, daß die der ersten und der zweiten Spindelposition der mindestens einen Bearbeitungsstation zugeordneten Werkzeuge auf zueinander parallelen Werkzeugbahnen bewegbar sind. Diese Lösung hat den großen Vorteil, daß die Positioniervorrichtungen zur Bewegung der beiden Werkzeuge auf ihren jeweiligen Werkzeugbahnen raumsparend und kollisionsfrei bewegbar angeordnet werden können.

Der Verlauf der parallel zueinander verlaufenden Werkzeugbahnen relativ zur Trommelachse kann prinzipiell beliebig sein. Besonders vorteilhaft ist es, ebenfalls im Hinblick auf eine raumsparende Bauweise, wenn die Werkzeugbahnen parallel zu einer zwischen der ersten und der zweiten Spindelposition liegenden radialen Richtung zur Trommelachse verlaufen.

Im Extremfall könnten die Werkzeugbahnen so liegen, daß eine der Werkzeugbahnen durch eine Spindelachse der ersten Spindelposition oder der zweiten Spindelposition hindurch verläuft. Besonders vorteilhaft ist es jedoch, wenn die beiden zueinander parallelen Werkzeugbahnen symmetrisch zu einer mittig zwischen der ersten und der zweiten Spindelposition liegenden radialen Richtung zur Trommelachse verlaufen.

Um sicherzustellen, daß bei der Bearbeitung in der ersten und der zweiten Spindelposition der mindestens einen Bearbeitungsstation eine übliche Drehbearbeitung möglich ist, ist vorteilhafterweise vorgesehen, daß das jeder Spindelposition zugeordnete Werkzeug bezogen auf die in dieser Spindelposition stehende Werkzeugspindel in einer X-Richtung relativ zu dieser Werkzeugspindel bewegbar ist, wobei die X-Richtung stets die Spindelachse der in der jeweiligen Spindelposition stehenden Werkstückspindel schneidet.

Um keine Winkelfehler bei der Bearbeitung in der ersten und der zweiten Spindelposition der mindestens einen Bearbeitungsstation zu erhalten, ist vorteilhafterweise vorgesehen, daß bezogen auf eine werkstückspindelfeste Referenzposition des Werkstücks die X-Richtung in der zweiten Spindelachse gegenüber der ersten Spindelposition um einen Winkel verdreht angeordnet ist und daß eine die Koordinaten einer Bearbeitung des Werkstücks berechnende Steuerung die Verdrehung berücksichtigt. Damit ist insbesondere bei Bearbeitung des Werkstücks mit angetriebenen Werkzeugen sichergestellt, daß eine Bearbeitung in X-Richtung in der ersten Spindelposition identisch mit einer Bearbeitung in der X-Richtung in der zweiten Spindelposition der mindestens einen Bearbeitungsstation ist.

Wie bereits im vorstehenden, insbesondere im Zusammenhang mit den zueinander parallelen Werkzeugbahnen, erwähnt, können prinzipiell die Werkzeuge völlig unabhängig voneinander bewegbar und somit auch positionierbar sein.

Eine, insbesondere hinsichtlich der Einfachheit des Aufbaus und der Ansteuerung der Werkzeuge besonders vorteilhafte Ausführungsform der erfindungsgemäßen Lösung sieht jedoch vor, daß die der ersten und der zweiten Spindelposition der Bearbeitungsstation zugeordneten Werkzeuge von einer gemeinsamen Positioniervorrichtung positionierbar sind. Damit ist für die Positionierung der Werkzeuge sowohl in der ersten als auch in der zweiten Spindelposition lediglich eine Positioniervorrichtung vorzusehen und nur eine Positioniervorrichtung auch von der entsprechenden Steuerung in den gewünschten Richtungen anzusteuern.

Besonders vorteilhaft ist es hierbei, steuerungsseitig - beispielsweise über die Drehstellung der Spindeltrommel - zu erfassen, ob das der ersten Spindelposition oder das der zweiten Spindelposition zugeordnete Werkzeug zum Einsatz kommt, um unterschiedliche Schneidenpositionen der Werkzeuge und gegebenenfalls auch die unterschiedliche Ausrichtung der X-Richtung zu korrigieren.

Die vorstehend beschriebene Positioniervorrichtung könnte prinzipiell stets noch so ausgebildet sein, daß sie entweder auf das eine oder das andere Werkzeug wirkt. Besonders einfach ist jedoch eine Lösung, bei welcher die der ersten und der zweiten Spindelposition der Bearbeitungsstation zugeordneten Werkzeuge gleichzeitig durch die Positioniervorrichtung bewegbar sind. Das heißt es wird keine Auswahl hinsichtlich der Bewegung des einen oder anderen Werkzeugs getroffen, sondern es werden stets beide Werkzeuge gleichzeitig positioniert, wobei durch die Positionierung des Werkstücks entweder in der ersten oder in der zweiten Spindelposition gleichzeitig auch festgelegt ist, daß das der ersten Spindelposition bzw. der zweiten Spindelposition zugeordnete Werkzeug zum Einsatz kommt.

Die Positioniervorrichtung kann in jeder bei Werkzeugmaschinen bekannten beliebigen Art ausgebildet sein. So wäre es für besondere Arten der Bearbeitung denkbar, die Positioniervorrichtung, beispielsweise für den Fall, daß die Werkzeuge in einer nicht der X-Richtung entsprechenden Richtung bewegbar sind, in Form einer Pinole auszubilden. Besonders vorteilhaft ist es jedoch, insbesondere für die in X-Richtung bewegbaren Werkzeuge, wenn die Positioniervorrichtung ein Werkzeugschlitten ist, auf dem die der ersten und der zweiten Spindelposition der Bearbeitungsstation zugeordneten Werkzeuge angeordnet sind.

Die Werkzeuge könnten beispielsweise immer noch in einer Werkzeugwechselvorrichtung, beispielsweise einem Werkzeugrevolver, angeordnet sein. Die erfindungsgemäße Lösung kommt jedoch besonders vorteilhaft dann zum Tragen, wenn die Werkzeuge unbeweglich mit der Positioniervorrichtung verbunden sind, da insbesondere in diesem Fall der gesamte Aufwand für die Werkzeugwechselvorrichtung entfallen kann und trotzdem eine hohe Zahl von Werkzeugen eingesetzt werden kann.

Die Positioniervorrichtung kann - wie bereits erwähnt - prinzipiell in allen Richtungen relativ zum in der jeweiligen Spindelposition stehenden Werkstück bewegbar sein. Eine besonders vorteilhafte Lösung, insbesondere bei Vorsehen einer X-Achse, verwendet eine quer zu einer Trommelachse der Spindeltrommel bewegbare Positioniervorrichtung.

Vorzugsweise ist dabei die Positioniervorrichtung in einer zur Trommelachse radialen Richtung bewegbar.

Um die Zahl der einsetzbaren Werkzeuge weiter zu vergrößern ist vorteilhafterweise vorgesehen, daß jeder Spindelposition der mindestens einen Bearbeitungsstation zwei Werkzeuge zugeordnet sind.

Besonders vorteilhaft ist es im Hinblick auf die erfindungsgemäße Lösung, bei welcher eine möglichst einfache Betätigung der Werkzeuge angestrebt ist, wenn die beiden einer Spindelposition zugeordneten Werkzeuge gemeinsam bewegbar sind.

Vorzugsweise sind dabei die beiden Werkzeuge so relativ zueinander angeordnet, daß sie alternativ an dem Werkstück einsetzbar sind.

Eine besonders vorteilhaft Lösung sieht vor, daß die beiden einer Spindelposition zugeordneten Werkzeuge längs parallelen Werkzeugbahnen, vorzugsweise längs einer gemeinsamen Werkzeugbahn bewegbar sind.

Prinzipiell wäre es denkbar, die erste und die zweite Spindelposition im selben Winkelabstand voneinander anzuordnen, wie unmittelbar aufeinanderfolgende Spindelpositionen zweier verschiedener aufeinanderfolgender Stationen. Diese Lösung ist jedoch für eine optimale Ausnutzung der erfindungsgemäßen Vorteile nachteilig.

Aus diesem Grund ist erfindungsgemäß vorgesehen, daß die erste und zweite Spindelposition der mindestens einen Bearbeitungsstation ein Winkelabstand voneinander aufweisen, welcher ungleich dem Winkelabstand zweier unmittelbar aufeinanderfolgender Spindelpositionen zweier verschiedener Stationen ist, das heißt, daß die Winkelabstände zwischen aufeinanderfolgenden Spindelpositionen nicht gleich sondern unterschiedlich sind, so daß die erfindungsgemäßen Vorteile besonders optimal genutzt werden können.

Eine besonders vorteilhafte Lösung sieht vor, daß die erste und die zweite Spindelposition der mindestens einen Bearbeitungsstation einen Winkelabstand voneinander aufweisen, welcher kleiner ist als 360° geteilt durch die Anzahl der Spindelpositionen aller Stationen. Somit sind die Spindelpositionen jeder Station in einem geringeren Winkelabstand angeordnet, als er bei gleichmäßiger Verteilung aller Spindelpositionen um die Trommelachse herum auftreten würde. Dies ermöglicht es, die Werkzeuge für die Spindelpositionen einer Bearbeitungsstation nahe beieinander anzuordnen.

Prinzipiell könnte der Winkelabstand zwischen der ersten und zweiten Spindelposition jeder Bearbeitungsstation und der Winkelabstand aufeinanderfolgender Spindelpositionen bei aufeinanderfolgenden Stationen unabhängig voneinander gewählt werden. Aus Gründen einer möglichst einfachen Ansteuerung der Spindeltrommel ist es jedoch vorteilhaft, wenn die erste und die zweite Spindelposition einen Winkelabstand voneinander aufweisen, welcher einem ganzzahligen Bruchteil des Winkelabstandes zwischen zwei unmittelbar aufeinanderfolgenden Spindelpositionen zweier unmittelbar aufeinanderfolgender Stationen entspricht.

Hinsichtlich der Wahl des Winkelabstandes zwischen der ersten und der zweiten Spindelposition der mindestens einen Bearbeitungsstation ist vorteilhafterweise vorgesehen, daß der Winkelabstand zwischen der ersten und der zweiten Spindelposition so gewählt ist, daß das in einer der Spindelpositionen stehende Werkstück in dieser kollisionsfrei relativ zu dem Werkzeug in der anderen Spindelposition dieser Bearbeitungsstation bearbeitbar ist.

Hinsichtlich der Anordnung der Werkstückspindeln wurden im Zusammenhang mit der bisherigen Erläuterung der einzelnen Ausführungsbeispiele keine näheren Angaben gemacht. So ist vorteilhafterweise vorgesehen, daß die Werkstückspindeln und die Stationen in konstanten Winkelabständen voneinander an der Spindeltrommel angeordnet sind.

Prinzipiell wäre es möglich, die Werkstückspindeln starr an der Spindeltrommel anzuordnen, und die zur Bearbeitung der Werkstücke notwendigen Achsbewegungen durch geeignete Bewegung der Werkzeuge durchzuführen. Ein besonders vorteilhaftes Ausführungsbeispiel sieht jedoch vor, daß die Werkstückspindel in Richtung ihrer Spindelachse relativ zur Spindeltrommel bewegbar sind, um eine Z-Achsbewegung für die Bearbeitung des Werkstücks zu erhalten. Diese Lösung hat nicht nur den Vorteil, daß eine Achsbewegung zur Werkstückspindel verlagert ist, sondern gleichzeitig sowohl bei horizontal verlaufenden als auch bei vertikal verlaufenden Spindelachsen der Werkstückspindeln auch den Vorteil, daß die Z-Achsbewegung der Werkstückspindeln zum Aufnehmen und Ablegen des Werkstücks in einem Werkstücktransportsystem, beispielsweise in einer Be- und Entladestation, ausgenutzt werden können.

Dieser Vorteil ist von besonderer Bedeutung, wenn die Mehrspindeldrehmaschine im wesentlichen vertikal verlaufende Werkstückspindeln aufweist, da dann die Schwerkraft bei die Handhabung der Werkstücke zusätzlich erleichtert.

Hinsichtlich der in den ersten und zweiten Spindelpositionen der Bearbeitungsstationen eingesetzten Werkzeuge wurden bislang keine näheren Angaben gemacht. So ist es beispielsweise bei einer einseitigen Bearbeitung mit einer Vielzahl von Bearbeitungsvorgängen möglich, in jeder Spindelposition ein anderes Werkzeug vorzusehen und in einer geeigneten Schrittfolge die einzelnen Werkstückspindeln so zu bewegen, daß mit dem Werkstück jede der Spindelpositionen aller Bearbeitungsstationen durchlaufen wird.

Alternativ dazu ist es mit der erfindungsgemäßen Lösung jedoch möglich, daß alle ersten Spindelpositionen aller Bearbeitungsstationen und alle zweiten Spindelpositionen aller Bearbeitungsstationen einen eigenen Satz von Werkzeugen aufweisen. Diese Lösung schafft die Möglichkeit, zunächst eine erste Art von Werkstücken mit den Werkzeugen der ersten Spindelpositionen zu bearbeiten, wobei beispielsweise alle ersten Spindelpositionen unterschiedliche Werkzeuge tragen können. Danach erfolgt die Bearbeitung einer zweiten Art von Werkstücken in den zweiten Spindelpositionen. Die Sätze von Werkzeugen in der ersten und zweiten Spindelposition können auch identisch sein. Gleiches ist auch bei der ersten Art und der zweiten Art von Werkstücken möglich. Nach Verschleiß der Werkzeuge in den ersten Spindelpositionen kann dann auf die zweiten Spindelpositionen aller Bearbeitungsstationen gewechselt werden und aufgrund des identischen Satzes von Werkzeugen in den zweiten Spindelpositionen sind dann dieselben Bearbeitungen in den zweiten Spindelpositionen möglich, solange, bis auch die Werkzeuge in den zweiten Spindelpositionen verschlissen sind.

Alternativ dazu ist es aber auch möglich, ständig zwischen dem Satz von Werkzeugen in den ersten oder dem Satz von Werkzeugen in den zweiten Spindelpositionen zu wechseln, so daß beide Sätze von Werkzeugen sich gleichmäßig abnutzen.

Damit schafft die erfindungsgemäße Lösung die Möglichkeit, gegenüber den aus dem Stand der Technik bekannten Lösungen die doppelte Laufzeit zu erreichen, ohne daß ein Werkzeugwechsel erforderlich ist.

Die erfindungsgemäße Mehrspindeldrehmaschine kann so ausgebildet sein, daß lediglich Teile auf einer Seite zu bearbeiten sind. Dies ist die einfachste Einsatzmöglichkeit einer Mehrspindeldrehmaschine.

Besonders zweckmäßig einsetzbar sind die erfindungsgemäßen Mehrspindeldrehmaschinen bei den Werkstücken, bei denen eine beidseitige Bearbeitung erfolgen soll.

Vorteilhafterweise ist hierzu vorgesehen, daß in Umlaufrichtung aufeinanderfolgend angeordnete Werkstückspindeln abwechselnd mit einer Aufnahme für eine erste Seite und einer Aufnahme für eine zweite Seite des Werkstücks versehen sind, so daß aufeinanderfolgende Werkstückspindeln abwechselnd Werkstücke tragen, die auf unterschiedlichen Seiten zu bearbeiten sind.

Eine derartige Bearbeitung des Werkstücks auf der ersten und der zweiten Seite hat für die einzusetzenden Werkzeuge insoweit Konsequenzen, als die entsprechenden Werkzeuge für die in der jeweiligen Spindelposition vorgesehene Bearbeitung geeignet sein müssen.

So sieht ein vorteilhaftes Ausführungsbeispiel vor, daß die in den Spindelpositionen der Bearbeitungsstation vorgesehenen Werkzeuge sowohl für die Bearbeitung der ersten als auch der zweiten Seite des Werkstücks geeignet sind.

Eine andere vorteilhafte Lösung sieht vor, daß eine der Spindelpositionen der mindestens einen Bearbeitungsstation ein ausschließlich eine Seite des Werkstücks bearbeitendes Werkzeug aufweist. Damit ist die Möglichkeit geschaffen, in dieser Spindelposition nur eine Seite des Werkstücks zu bearbeiten und somit auch ein geeignetes, besonders für diese Seite vorgesehenes Werkzeug anzuordnen, während in der anderen Spindelposition derselben Bearbeitungsstation keine zwingenden Vorgaben für das einzusetzende Werkzeug bestehen. So ist es beispielsweise möglich, in der anderen Spindelposition der Bearbeitungsstation ein beide Seiten des Werkstücks bearbeitendes Werkzeug anzuordnen oder alternativ dazu ebenfalls ein nur eine Seite des Werkstücks bearbeitendes Werkzeug.

Mit der erfindungsgemäßen Lösung ist es aber auch möglich, daß beiden Spindelpositionen einer der Bearbeitungsstationen Werkzeuge für nur die erste Seite des Werkstücks und den beiden Spindelpositionen einer anderen Bearbeitungsstation Werkzeuge für nur die zweite Seite des Werkstücks zugeordnet sind. Diese Lösung hat den großen Vorteil, daß einerseits die Werkzeuge den einzelnen Bearbeitungen der einzelnen Seiten eindeutig zugeordnet sind und andererseits bringt hier die erfindungsgemäße Lösung den großen Vorteil, daß pro Station mindestens zwei Werkzeuge, nämlich jeweils eines in jeder Spindelposition, für die Bearbeitung zur Verfügung stehen.

Eine besonders günstige Lösung hinsichtlich der Bearbeitung der Werkstücke sieht vor, daß die andere Bearbeitungsstation die auf die eine Bearbeitungsstation folgende Bearbeitungsstation ist.

Darüber hinaus betrifft die Erfindung ein Verfahren zum Herstellen von Drehteilen, bei welchem Werkstücke als Rohlinge in Werkstückaufnahmen einer Anzahl von an einer Spindeltrommel angeordneten und bei Drehung derselben um eine Spindeltrommelachse in einer Umlaufrichtung bewegbaren Werkstückspindel aufgenommen und in mindestens einer Bearbeitungsstation bearbeitet werden, wobei die Bearbeitungsstation eine von einer der Anzahl der Werkstückspindeln entsprechenden Anzahl von aufeinanderfolgend angeordneten Stationen am Maschinengestell ist, und bei welchem erfindungsgemäß in der Bearbeitungsstation eine erste Bearbeitung mit einem ersten Werkzeug in einer ersten Spindelposition und eine zweite Bearbeitung mit einem zweiten Werkzeug in einer zweiten, gegenüber der ersten Spindelposition in Umlaufrichtung im Winkelabstand angeordneten Spindelposition durchgeführt wird.

Der Vorteil des erfindungsgemäßen Verfahren ist darin zu sehen, daß in gleicher Weise wie bei der erfindungsgemäßen Mehrspindeldrehmaschine - insbesondere bei Einsatz eines der voranstehenden Ausführungsbeispiele derselben - die Möglichkeit eröffnet wird, auf möglichst einfache Art und Weise mehr Werkzeuge am Werkstück zum Einsatz zu bringen.

Besonders vorteilhaft ist es dabei, wenn jede der Stationen mit einer ersten Spindelposition und einer zweiten Spindelposition versehen ist und die ersten Spindelpositionen und die zweiten Spindelpositionen jeweils untereinander in gleichen Winkelabständen angeordnet sind. Damit besteht, insbesondere bei in gleichen Winkelabständen angeordneten Werkstückspindeln, Bearbeitungen mit optimierten Stückzeiten durchzuführen, da stets zumindest eine große Zahl der Werkstückspindeln, vorzugsweise sämtliche Werkstückspindeln, in einer Spindelposition stehen, in welcher eine Bearbeitung oder eine Handhabung des Werkstücks möglich ist.

Vorzugsweise erfolgt bei einem erfindungsgemäßen Verfahren die Fertigung eines Werkstück mittels eines Werkstückzyklus, welcher mindestens eine Schrittfolge mit mindestens einem Winkelschritt zur Drehung der Spindeltrommel aufweist.

Besonders zweckmäßig läßt sich ein Werkstück dann fertigen, wenn der Werkstückzyklus mehrere identische Schrittfolgen umfaßt. Jede Schrittfolge wird im einfachsten Fall durch einen Winkelschritt gebildet, besonders vorteilhaft ist es jedoch, insbesondere um die Möglichkeiten einer erfindungsgemäßen Mehrspindeldrehmaschine auszunützen, wenn jede Schrittfolge mehrere Winkelschritte unterschiedlicher Größe umfaßt.

Die Bearbeitung von Werkstücken mittels eines derartigen Werkstückzyklus sieht vor, daß der Werkstückzyklus nach einem Durchlauf einer bestimmten Zahl von Stationen beendet ist.

Die bestimmte Zahl von Stationen kann dabei entweder einen ganzzahligen Bruchteil sämtlicher Stationen der Mehrspindeldrehmaschine umfassen oder gleich der Zahl der Stationen der Mehrspindeldrehmaschine sein oder auch ein ganzzahliges Vielfaches der Zahl der Stationen der Mehrspindeldrehmaschine.

Die Schrittfolge kann prinzipiell beliebige Winkelschritte umfassen. Ein vorteilhaftes Ausführungsbeispiel einer erfindungsgemäßen Lösung sieht vor, daß die Summe der Winkelschritte einer Schrittfolge ein ganzzahliges Vielfaches von 360° geteilt durch die Anzahl der Werkstückspindeln beträgt. In diesem Fall ist es besonders einfach, die Schrittfolgen zu einem Werkstückzyklus zu kombinieren, welcher mit der Zahl der Stationen der Mehrspindeldrehmaschine kompatibel ist.

Mit der erfindungsgemäßen Mehrspindeldrehmaschine sind mehrere verschiedene Verfahren zur Bearbeitung eines Werkstücks durchführbar.

So sieht ein besonders vorteilhaftes Verfahren vor, daß bei Durchführung der Werkstückzyklen während eines ersten Zeitraums mit den Werkstückspindeln nur die ersten Spindelpositionen angefahren werden und danach während eines zweiten Zeitraums nur die zweiten Spindelpositionen.

Bei einem derartigen Verfahren werden zunächst nur die Werkstückzyklen durch Anfahren der ersten Spindelpositionen abgearbeitet und erst nachfolgend die zweiten Spindelpositionen. Das heißt, daß die erfindungsgemäße Mehrspindeldrehmaschine während des Anfahrens der ersten Spindelpositionen so betrieben wird wie eine konventionelle Mehrspindeldrehmaschine und auch während des Anfahrens der zweiten Spindelposition in gleicher Weise, daß jedoch ein Wechsel von den ersten auf die zweiten Spindelpositionen möglich ist.

Beispielsweise ist es bei einem derartigen Verfahren denkbar, die Werkzeuge in den ersten Spindelpositionen so zu wählen, daß ein erster Typ von Werkstücken unter Heranziehung der den ersten Spindelpositionen zugeordneten Werkzeuge und Handhabungseinrichtungen bearbeitet wird und in unmittelbarem Anschluß daran, ohne daß die Maschine umgerüstet werden muß, ein zweiter Typ von Werkstücken unter Anfahren der zweiten Spindelpositionen und Ausnutzen der den zweiten Spindelpositionen zugeordneten Werkzeugen und Handhabungsvorrichtungen.

Bei einer anderen Lösung ist es aber auch denkbar, daß der erste Zeitraum durch die Abnützung der Werkzeuge in den ersten Spindelpositionen bestimmt ist. In diesem Fall ist in den zweiten Spindelpositionen derselbe Satz von Werkzeugen angeordnet wie in den ersten Spindelpositionen, so daß durch ein Wechseln von den ersten Spindelpositionen in die zweite Spindelpositionen weiterhin Werkstücke mit weniger abgenutzten Werkzeugen bearbeitet werden können.

Vorzugsweise erfolgt die Bearbeitung in den zweiten Spindelpositionen während eines zweiten Zeitraums, welcher ebenfalls dann durch die Abnützung der Werkzeuge in den zweiten Spindelpositionen bestimmt ist.

Die ersten und zweiten Zeiträume können so bestimmt sein, daß jeweils eine teilweise Abnutzung der Werkzeuge erfolgt, oder so, daß jeweils die volle Abnutzung der Werkzeuge erfolgt.

Bei einer weiteren Variante des erfindungsgemäßen Verfahrens ist vorgesehen, daß alle in Umlaufrichtung aufeinanderfolgenden Spindelpositionen in Umlaufrichtung nacheinander von den einzelnen Werkstückspindeln durchlaufen werden. Das heißt, daß die Drehung der Spindeltrommel derart erfolgt, daß die Werkstückspindeln stets die in Umlaufrichtung nächstfolgenden Spindelpositionen erreichen.

Die vorstehend beschriebenen Varianten des erfindungsgemäßen Verfahrens sind beispielsweise auch dann durchführbar, wenn ein Werkstück auf einer ersten Seite und einer zweiten Seite bearbeitet wird.

Diese Bearbeitung erfolgt vorzugsweise dadurch, daß in jeweils in Umlaufrichtung aufeinanderfolgenden Werkstückspindeln die Werkstücke alternierend zur Bearbeitung der ersten Seite und Bearbeitung der zweiten Seite aufgenommen sind.

Vorzugsweise ist hierbei vorgesehen, daß mit mindestens einem der Winkelschritte der Schrittfolge ein in Umlaufrichtung nächstfolgende Spindelposition übersprungen wird. Eine derartige Variante des erfindungsgemäßen Verfahrens eröffnet die Möglichkeit, in der jeweils übersprungenen Spindelposition eine Bearbeitung ausschließlich einer Seite der Werkstücke vorzusehen, so daß hierbei auch Werkzeuge zum Einsatz kommen können, die ausschließlich zur Bearbeitung der einen Seite geeignet sind.

Prinzipiell ist bei einer derartigen Variante des erfindungsgemäßen Verfahrens möglich, nur die in Umlaufrichtung nächstfolgende Spindelposition zu überspringen. Es ist aber auch möglich, zwei in Umlaufrichtung nächstfolgende Spindelpositionen oder gar drei in Umlaufrichtung nächstfolgende Spindelpositionen zu überspringen.

Die vorstehend genannten Varianten des erfindungsgemäßen Verfahrens könnten entweder so durchgeführt werden, daß jeder der Winkelschritte der Schrittfolge dazu dient, eine nächstfolgende Spindelposition zu überspringen.

Die vorstehend beschriebenen Varianten können erfindungsgemäß aber auch mit einem Winkelschritt kombiniert werden, bei welchem ein Wechsel von einer Spindelposition zur in Umlaufrichtung nächstfolgenden Spindelposition erfolgt.

Im einzelnen können die Varianten des erfindungsgemäßen Verfahrens beispielsweise so ausgebildet sein, daß die Schrittfolge einen Winkelschritt umfaßt, bei welchem ein Wechsel von einer ersten Spindelposition zu einer zweiten Spindelposition erfolgt.

Ferner kann eine einen derartigen Winkelschritt aufweisende Schrittfolge beispielsweise mit einem Winkelschritt kombiniert werden, bei welchem ein Wechsel von einer zweiten Spindelposition zu einer ersten Spindelposition erfolgt.

Vorzugsweise erfolgt dabei der Wechsel von einer ersten Spindelposition zu einer zweiten Spindelposition innerhalb einer einzigen Station und der Wechsel von der zweiten Spindelposition zur ersten Spindelposition beim Übergang von einer Station zu einer folgenden Station.

Eine andere vorteilhafte erfindungsgemäße Lösung sieht vor, daß der Wechsel von einer ersten Spindelposition zu einer zweiten Spindelposition und der Wechsel von der zweiten Spindelposition zu der ersten Spindelposition jeweils beim Übergang von einer Station zu einer folgenden Station erfolgen.

Eine andere Lösung sieht vor, daß der Wechsel von einer ersten Spindelposition zu einer zweiten Spindelposition innerhalb einer Station und der Wechsel von der zweiten Spindelposition zu einer ersten Spindelposition beim Übergang von einer Station zur übernächsten Station erfolgt.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: einen vertikalen Schnitt durch eine erfindungsgemäße Mehrspindeldrehmaschine;
- Fig. 2: einen horizontalen Schnitt längs Linie 2-2 in Fig. 1;
- Fig. 3 und Fig. 4: Schnitte ähnlich Fig. 2 zur Darstellung einer ersten Variante eines erfindungsgemäßen Verfahrens;
- Fig. 5: einen Schnitt ähnlich Fig. 2 zur Darstellung einer zweiten Variante des erfindungsgemäßen Verfahrens;
- Fig. 6: eine schematische Darstellung der Schrittfolgen mit Angabe der Winkelschritte bei allen Varianten der erfindungsgemäßen Verfahren;
- Fig. 7: einen Schnitt ähnlich Fig. 2 zur Darstellung einer dritten Variante des erfindungsgemäßen Verfahrens;
- Fig. 8: einen Schnitt ähnlich Fig. 2 zur Darstellung einer vierten Variante des erfindungsgemäßen Verfahrens;
- Fig. 9 und Fig. 10: Schnitte ähnlich Fig. 2 zur Darstellung einer fünften Variante des erfindungsgemäßen Verfahrens;
- Fig. 11 und Fig. 12: Schnitte ähnlich Fig. 2 zur Darstellung einer sechsten Variante des erfindungsgemäßen Verfahrens;
- Fig. 13 und Fig. 14: Schnitte ähnlich Fig. 2 zur Darstellung einer siebten Variante des erfindungsgemäßen Verfahrens;
- Fig. 15 und Fig. 16: Schnitte ähnlich Fig. 2 zur Darstellung einer achten Variante des erfindungsgemäßen Verfahrens.

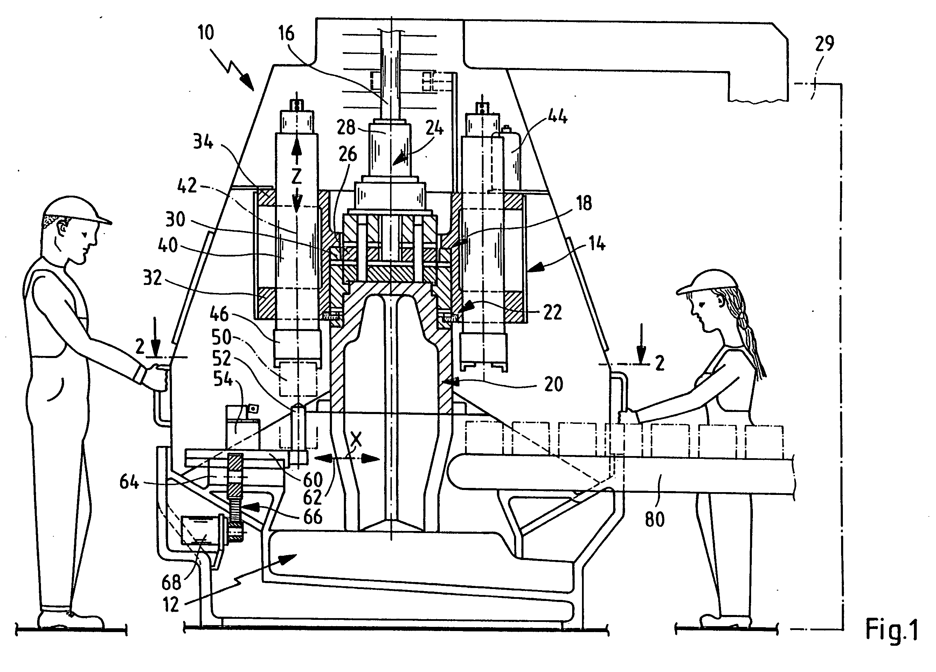

Ein in Fig. 1 dargestelltes, als Ganzes mit 10 bezeichnetes Ausführungsbeispiel einer Mehrspindeldrehmaschine umfaßt ein Maschinengestell 12, an welchem eine Spindeltrommel 14 um eine vertikale Trommelachse 16 drehbar gelagert ist.

Beispielsweise wird die drehbare Lagerung der Spindeltrommel 14 durch eine nicht im einzelnen beschriebene Lagereinheit 18 realisiert, wobei sich die Lagereinheit 18 an einer Ständersäule 20 des Maschinengestells abstützt, so daß die Ständersäule 20 über die Lagereinheit 18 die Spindeltrommel 14 trägt und drehbar lagert. Ferner ist zur Festlegung der Spindeltrommel 14 in einzelnen Drehstellungen eine Hirthverzahnung 22 vorgesehen.

Zum Verdrehen der Spindeltrommel 14 relativ zum Maschinengestell 12 beispielsweise in einer Umlaufrichtung 23 ist ein als Ganzes mit 24 bezeichneter Drehantrieb vorgesehen, welcher einen ein Planetengetriebe 26 antreibenden Antriebsmotor 28 aufweist, wobei über das Planetengetriebe 26 ein mit der Spindeltrommel 14 verbundener Zahnkranz 30 antreibbar ist.

Der Antriebsmotor 28 ist mittels einer NC-Steuerung 29 so steuerbar, daß die Drehung der Spindeltrommel 14 um genau definierbare Winkelschritte S möglich ist.

Die Lagerung der Spindeltrommel 14 muß nicht wie beim dargestellten Ausführungsbeispiel über die Ständersäule 20 des Maschinengestells 12 erfolgen, sondern kann auch umfangsseitig der Spindeltrommel 14 erfolgen, wie dies beispielsweise in den deutschen Patentanmeldungen 195 04 369.3 und 195 04 371.5 dargestellt ist, auf welche hiermit vollinhaltlich Bezug genommen wird.

Die Spindeltrommel 14 umfaßt ihrerseits einen unteren Führungsflansch 32 sowie einen oberen Führungsflansch 34, an welchen eine Vielzahl von Werkstückspindeln 40 in Richtung ihrer vertikalen Spindelachse 42 verschiebbar gelagert ist, wobei die Spindelachse 42 vorzugsweise parallel zur Trommelachse 16 verläuft, jedoch auch gegenüber dieser um einen spitzen Winkel geneigt verlaufen kann.

Zur mittels der NC-Steuerung 29 steuerbaren Bewegung der Werkstückspindeln 40 in Richtung ihrer Spindelachse 42 ist an der Spindeltrommel 14 für jede der Werkstückspindeln 40 ein eigener Linearantrieb 44 vorgesehen, mit welchem die jeweilige Werkstückspindel 40 als Ganzes, vorzugsweise mitsamt einem eingebauten Spindelmotor, in Richtung der Spindelachse 42 verschiebbar ist. Ein Ausführungsbeispiel eines derartigen Linearantriebs 44 ist beispielsweise in den deutschen Patentanmeldungen 195 04 369.3 und 195 04 371.5 im Detail beschrieben.

Jede der Werkstückspindeln 40 trägt an ihrem vorderen, bei vertikalen Werkstückspindeln unteren Ende eine Werkstückaufnahme 46 zur Aufnahme eines zu bearbeitenden Werkstücks 50, wobei die Werkstückaufnahme 46 beispielsweise als Spannfutter ausgebildet ist, jedoch aber auch beispielsweise in Form einer Spannzange ausgebildet sein kann.

Die in den Werkstückaufnahmen 46 der Werkstückspindeln 40 gehaltenen Werkstücke sind in Bearbeitungsstationen vorgesehenen Werkzeugen 52 und/oder 54 zugewandt angeordnet, wobei die Werkzeuge 52 und/oder 54 auf einem Werkzeugschlitten 60 sitzen, der seinerseits in einer Richtung 62 linear verfahrbar ist. Die Richtung 62 verläuft quer, vorzugsweise senkrecht zu der Spindelachse 42 derjenigen Werkstückspindel 40, welche in einer Spindelposition steht, in welcher eine Bearbeitung mit den Werkzeugen 52 oder 54 des Werkzeugschlittens 60 möglich ist.

Jeder Werkzeugschlitten 60 einer Bearbeitungsstation ist seinerseits noch an einer fest am Maschinengestell 12 angeordneten Schlittenführung 64 gelagert und über einen als Ganzes mit 66 bezeichneten und durch die NC-Steuerung 29 gesteuerten Linearantrieb antreibbar, welcher vorzugsweise einen Antriebsmotor 68 aufweist, der seinerseits über ein Getriebe einen zeichnerisch nicht im Detail dargestellten Spindelantrieb zum Verschieben des Werkzeugschlittens 60 antreibt.

Bei der Bearbeitung des in der Werkstückaufnahme 46 jeder Werkstückspindel 40 aufgenommenen Werkstücks 50 bildet die durch die Verschiebbarkeit der Werkstückspindel 40 längs ihrer Spindelachse 42 mögliche Achsbewegung die Z-Achse, während die durch die Verschiebbarkeit des Werkzeugschlittens 60 in Richtung 62 mögliche Achsbewegung die X-Achse bildet, so daß in jeder Spindelposition einer Bearbeitungsstation durch eine Relativbewegung des Werkstücks 50 zu den Werkzeugen 52 oder 54 übliche Drehbearbeitungsvorgänge durchführbar sind.

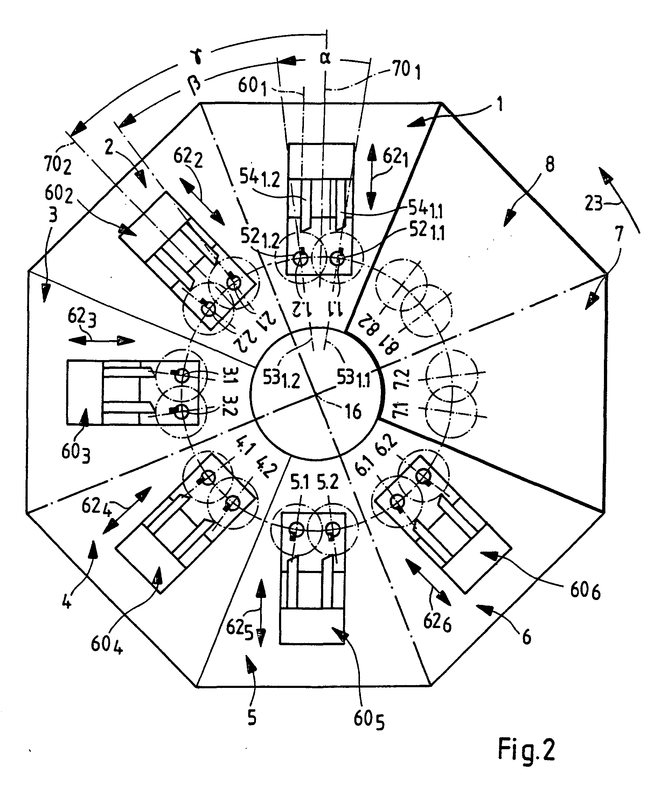

Zur Durchführung einer Bearbeitung der in den Werkstückaufnahmen 46 der Werkstückspindel 40 gehaltenen Werkstücke 50 sind an dem Maschinengestell 12, wie in Fig. 2 dargestellt, mehrere Stationen 1 bis 8 vorgesehen, wobei beispielsweise die Stationen 1 bis 6 Bearbeitungsstationen und die Stationen 7 und 8 beispielsweise Be- und Entladestationen zum Be- und Entladen der Werkstücke 50 sind.

In jeder der Bearbeitungsstationen 1 bis 6 ist jeweils ein einziger Werkzeugschlitten 60₁ bis 60₆ angeordnet, der jeweils in der entsprechenden Richtung 62₁ bis 62₆ bewegbar ist.

Die Werkzeugschlitten 60₁ bis 60₆ sind dabei in den Bearbeitungsstationen 1 bis 6 so angeordnet, daß deren Mittel- oder Symmetrieachse 70₁ bis 70₆ bei aufeinanderfolgenden Werkzeugschlitten 60₁ bis 60₆ in einem Winkelabstand γ voneinander angeordnet sind, welcher im Fall der insgesamt acht Stationen 1 bis 8 jeweils 45° beträgt.

Die Spindeltrommel 14 ist mit einer Anzahl von in gleichen Winkelabständen γ voneinander angeordneten Werkstückspindeln 40 versehen, welche der Zahl der Stationen 1 bis 8 entspricht, so daß im Falle von 8 Stationen auch 8 Werkstückspindeln 40 an der Spindeltrommel 14 angeordnet sind.

Erfindungsgemäß ist nicht jeder der Stationen 1 bis 8 nur eine einzige Spindelposition zugeordnet, sondern jede der Stationen 1 bis 8 weist zwei Spindelpositionen 1.1 und 1.2 bzw. 2.1 und 2.2 ... 8.1 und 8.2 auf, in welchen die Werkstückspindeln 40 der Spindeltrommel 14 positionierbar sind.

Beispielsweise sind, wie in Fig. 2 dargestellt, sämtliche Werkstückspindeln 40 der Spindeltrommel 14 jeweils in der ersten Spindelposition 1.1, 2.1, 3.1, 4.1, 5.1, 6.1, 7.1, 8.1 der einzelnen Stationen 1, 2, 3, 4, 5, 6, 7, 8 positionierbar oder in der zweiten Spindelposition 1.2, 2.2, 3.2, 4.2, 5.2, 6.2, 7.2, 8.2, was voraussetzt, daß die aufeinanderfolgenden ersten Spindelpositionen 1.1, 2.1 ... 8.1 untereinander im Winkelabstand γ voneinander angeordnet sind und auch die aufeinanderfolgenden zweiten Spindelpositionen 1.2, 2.2 ... 8.2.

Dies hat ferner zur Folge, daß die erste Spindelposition 1.1 ... 8.1 und die zweiten Spindelposition 1.2 ... 8.2 der jeweiligen Station 1 ... 8 jeweils im selben Winkelabstand α voneinander angeordnet sind, während die zweite Spindelposition 1.2 ... 8.2 gegenüber der jeweils nächstfolgenden ersten Spindelposition 2.1 ... 1.1 der nächstfolgenden Stationen in einem Winkelabstand β angeordnet ist, der ebenfalls zwischen allen aufeinanderfolgenden zweiten Spindelpositionen 1.2 ... 8.2 und den folgenden ersten Spindelpositionen 2.1 ... 1.1. jeweils derselbe ist.

Vorzugsweise beträgt der Winkel α die Hälfte des Winkels β so daß im beschriebenen Ausführungsbeispiel α gleich 15° und β gleich 30° ist, da der Winkelabstand y 45° beträgt.

Um nun in beiden Spindelpositionen 1.1, 1.2 ... 6.1, 6.2 aller Bearbeitungsstationen 1 ... 6 das Werkstück 50 bearbeiten zu können, ist jeder der Spindelpositionen 1.1, 1.2 ... 6.1, 6.2 mindestens ein Werkzeug 54_{1.1} zugeordnet, wobei die beiden Werkzeuge 54_{1.1} und 54_{1.2} als stationäre Werkzeuge auf demselben Schlitten 60₁ montiert sind und somit auch nur gemeinsam in Richtung 62 verfahrbar sind. Dabei bewegt sich jedes Werkzeug auf einer eigenen, parallel zur Richtung 62 verlaufenden Werkzeugbahn 53_{1.1} bzw. 53_{1.2}.

Vorzugsweise verläuft die Richtung 62 in jeder der Bearbeitungsstationen 1 bis 6 parallel zu einer zwischen den beiden Spindelpositionen 1.1 und 1.2 liegenden radialen Richtung zur Trommelachse 16, wobei die radiale Richtung insbesondere symmetrisch zwischen den beiden Spindelpositionen 1.1 und 1.2 liegt und mit der Symmetrielinie 70 zusammenfällt. Gleiches gilt für alle übrigen Bearbeitungsstationen 2 bis 6.

Eine besonders bevorzugte Ausführungsform sieht für jede Spindelposition 1.1 und 1.2 einer Bearbeitungsstation nicht nur ein Werkzeug 54_{1.1} bzw. 54_{1.2} auf dem jeweiligen Schlitten 60₁ vor, sondern zusätzlich noch jeweils ein weiteres sich ebenfalls längs der jeweiligen Werkzeugbahn 53_{1.1} bzw. 53_{1.2} bewegendes Werkzeug, nämlich die Werkzeuge 52_{1.1} bzw. 52_{1.2}, wobei durch Verfahren des Schlittens 60 in Richtung 62 entweder eines der Werkzeuge 54 oder eines der Werkzeuge 52 am Werkstück 50 in der jeweiligen Spindelposition 1.1 oder 1.2 einsetzbar ist.

Im beispielhaft dargestellten Fall sind die Werkzeuge 54 Außendrehwerkzeuge, während es sich bei den Werkzeugen 52 um Bohrstangen handelt. Es sind jedoch aber auch alle andersartigen Werkzeuge einsetzbar.

Je nach Drehung der Spindeltrommel 14 mit den Werkstückspindeln 40 sind nun in den einzelnen Bearbeitungsstationen 1 bis 6 die unterschiedlichsten Bearbeitungen durchführbar.

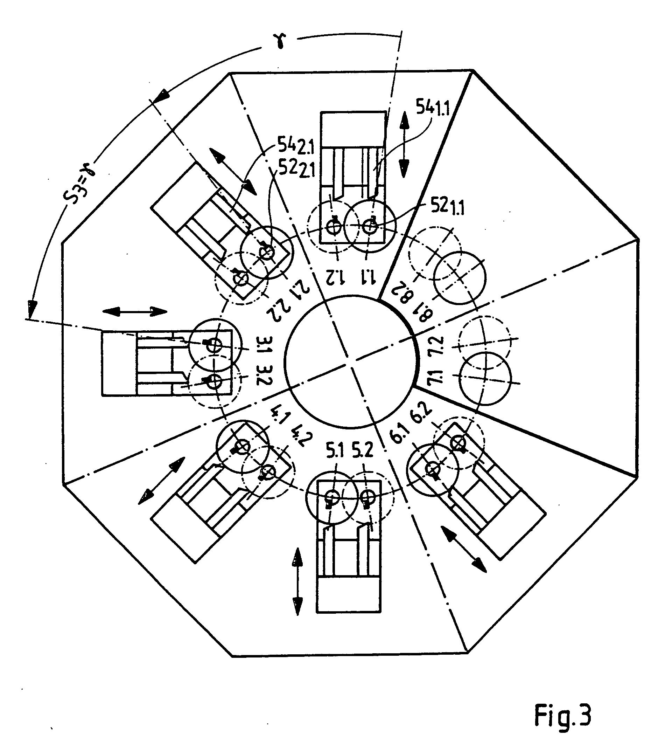

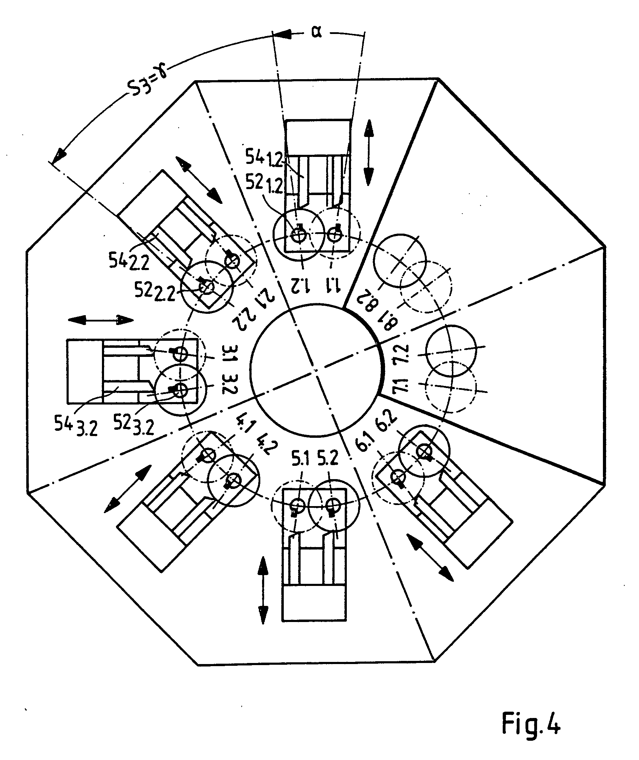

Bei einer ersten Variante eines Verfahrens zur Bearbeitung von Werkstücken 50 mit der erfindungsgemäßen Mehrspindeldrehmaschine - dargestellt in Fig. 3 und 4 - werden zunächst während eines ersten Zeitraums t₁ die Werkstückspindeln 40 durch Drehen der Spindeltrommel 14 um stets gleich große Winkelschritte S₃ der Größe γ stets in den ersten Spindelpositionen 1.1, 2.1, 3.1, 4.1, 5.1, 6.1, 7.1, 8.1 (in Fig. 3 mit dicken Linien durchgezogen gezeichnet) der Stationen 1 bis 8 positioniert, so daß in den Bearbeitungsstationen 1 bis 6 eine Bearbeitung der Werkstücke 50 mittels der Werkzeuge 52_{1.1} bis 52_{6.1} und/oder 54_{1.1} bis 54_{6.1} erfolgt. In diesem Fall umfaßt ein Werkstückzyklus acht gleiche Schrittfolgen, wobei jede Schrittfolge einen Winkelschritt S₃ umfaßt.

Die Stationen 7 und 8 sind als Be- und Entladestationen ausgebildet, wobei über ein Werkstücktransportsystem 80 die Zuund Abfuhr der Werkstücke 50 erfolgt. Das Werkstücktransportsystem 80 ist dabei so auszubilden, daß es in einer Spindelposition einer Station, beispielsweise der Spindelposition 7.1, die bearbeiteten Werkstücke 50 zur Abfuhr übernimmt und in der Spindelposition 8.1 der nächsten Station 8 die rohen Werkstücke 50 zur Übergabe bereitstellt, wobei ein Zugreifen durch eine Z-Achsenbewegung der Werkstückspindel 40 mit der Werkstückaufnahme 46 erfolgt.

Sind nach Ablauf des Zeitraums t₁ die Werkzeuge 52_{1.1} bis 52_{6.1} und/oder 54_{1.1} bis 54_{6.1} durch Verschleiß abgenutzt, so kann die Mehrspindeldrehmaschine weiterarbeiten, da eine Drehung der Spindeltrommel 14 um einen dem Winkel α entsprechenden Winkelschritt S₁ die Möglichkeit eröffnet in den zweiten Spindelpositionen 1.2 bis 6.2 (in Fig. 4 mit dicken Linien durchgezogen gezeichnet) der Bearbeitungsstationen (1 bis 6) die Werkstücke 50 weiterzubearbeiten.

Hierzu sind die zweiten Spindelpositionen 1.2 bis 6.2 mit denselben Werkzeugen 52 und 54 versehen, wie die ersten Spindelpositionen 1.1 bis 6.1, so daß dann unter weiterer Beibehaltung der Winkelschritte S₃ der Größe γ die Bearbeitung über einen zweiten Zeitraum t₂ bis zum Verschleiß der Werkzeuge 52 und 54 in den zweiten Spindelpositionen 1.2 bis 6.2 fortgesetzt werden kann.

In diesem Fall muß das Werkstücktransportsystem so aufgebaut sein, daß Werkstücke 50 auch in den zweiten Spindelpositionen 7.2 und 8.2 der Stationen 7 und 8 abführbar und zuführbar sind.

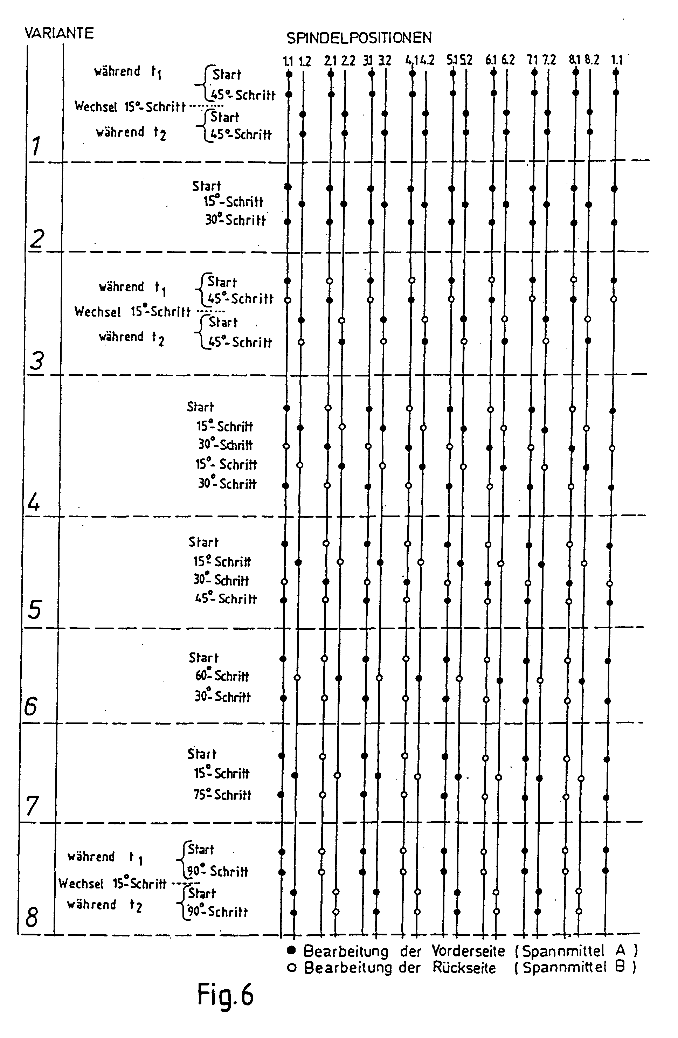

Die bei der Bearbeitung eines Werkstücks 50 nach der ersten Variante des erfindungsgemäßen Verfahrens mit den Werkstückspindeln 40 angefahrenen Spindelpositionen sind aus der für einen Überblick wichtigen Fig. 6 erkennbar.

Sind die Bearbeitungszeiträume groß, so ist es auch möglich, nur in der Station 8 die Zu- und Abfuhr der Werkstücke 50 vorzusehen, so daß die Stationen 1 bis 7 zur Bearbeitung zur Verfügung stehen.

Die Möglichkeiten der ersten Variante des erfindungsgemäßen Verfahrens sind in Tabelle 1 zusammenfassend dargestellt, wobei Tabelle 1 zeigt, daß je nach Gestaltung der Handhabung 12 oder 14 Werkzeuge 52 oder 54 oder Werkzeugpaare 52 und 54 zur Bearbeitung der Werkstücke 50 einsetzbar sind.

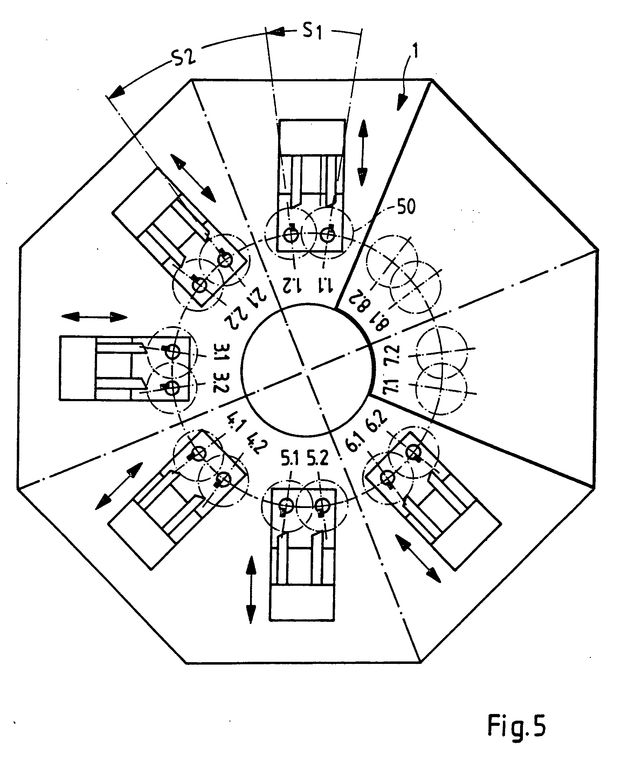

Eine zweite und zugleich einfache Variante des erfindungsgemäßen Verfahrens zur Bearbeitung von Werkstücken 50 in allen Spindelpositionen, dargestellt in Fig. 5, sieht vor, daß beispielsweise beginnend mit einer Bearbeitung des Werkstücks 50 in der ersten Spindelposition 1.1 der Bearbeitungsstation 1 zunächst eine Außenbearbeitung des Werkstücks 50 mit dem Werkzeug 54_{1.1} erfolgt und anschließend nach Verfahren des Schlittens 60₁ eine Bearbeitung mit dem Werkzeug 52_{1.1}.

Danach erfolgt eine Drehung der Spindeltrommel 14 in Form eines ersten Winkelschrittes S₁ so, daß das Werkstück 50 nicht mehr in der ersten Spindelposition 1.1 sondern in der zweiten Spindelposition 1.2 der Bearbeitungsstation 1 steht und in dieser ebenfalls mittels der Werkzeuge 52 und 54 bearbeitbar ist.

Danach erfolgt in Form eines Winkelschritts S₂ ein Weiterdrehen des Werkstücks 50 in die erste Spindelposition 2.1 der Bearbeitungsstation 2 und hernach wiederum in Form eines Winkelschritts S₁ ein Wechsel in die zweite Spindelposition 2.2 derselben.

In dieser Art und Weise können mit einem Werkstückzyklus umfassend acht Mal die Schrittfolge S₁ + S₂ mit den Winkelschritten S₁ und S₂ sämtliche Spindelpositionen 1.1, 1.2 ... 6.1, 6.2 aller Bearbeitungsstationen 1 bis 6 durchlaufen werden.

Beispielsweise ist eine derartige Vorgehensweise dann vorteilhaft, wenn eine möglichst große Zahl von Werkzeugen eingesetzt werden soll, wobei in jeder Bearbeitungsstation zwei Sätze von Werkzeugen 52 und 54 vorgesehen sind, so daß durch das Weiterschalten von der ersten Spindelposition 1.1 in die zweite Spindelposition 1.2 und Weiterbearbeitung mit den Werkzeugen 52 und 54 die Zahl der möglichen Werkzeuge verdoppelt werden kann, im Gegensatz zu der aus dem Stand der Technik bekannten Mehrspindeldrehmaschine, bei welcher ohne besondere Maßnahmen in einer Bearbeitungsstation in nur einer Spindelposition eine Bearbeitung erfolgen kann.

In gleicher weise wie die Bearbeitung des Werkstücks 50 in der ersten Spindelposition 1.1 der ersten Bearbeitungsstation erfolgt zur gleichen Zeit die Bearbeitung eines Werkstücks 50 in der Spindelposition 2.1 der Bearbeitungsstation 2 und so weiter bis zur Bearbeitungsstation 6. Dadurch daß in jeder der Bearbeitungsstationen 1 bis 6 jeweils eine Werkstückspindel 40 steht, erfolgt das Weiterschalten aller in allen Bearbeitungsstationen 1 bis 6 bearbeiteten Werkstücke 50 gleichzeitig bei Durchführung der beschriebenen Schaltschritte S₁ und S₂.

Wie in der Übersicht gemäß Fig. 6 dargestellt, werden bei der zweiten Variante des erfindungsgemäßen Verfahrens bei jedem Durchlauf durch die Stationen 1 bis 8 alle Spindelpositionen mit den Werkstückspindeln 40 angefahren.

In Tabelle 1 ist dargestellt, daß die zweite Variante des erfindungsgemäßen Verfahrens nicht nur die Verwendung der Stationen 7 und 8 als Ein-Ausgabestationen sondern auch bei Einsatz nur der Station 8 als Ein-Ausgabestation einsetzbar ist.

Je nach der Zahl der Ein-Ausgabestationen wechselt auch die Zahl der als Bearbeitungsstationen einsetzbaren Stationen und damit die Zahl der einsetzbaren Werkzeuge. Dies sind maximal 12 Werkzeuge 52 oder 54 oder Werkzeugpaare 52 und 54 bei sechs Bearbeitungsstationen oder 14 Werkzeuge 52 oder 54 oder Werkzeugpaare 52 und 54 bei sieben Bearbeitungsstationen

Die erfindungsgemäße Lösung läßt sich jedoch besonders vorteilhaft dann einsetzen, wenn in der erfindungsgemäßen Drehmaschine eine Bearbeitung einer Vorderseite und einer Rückseite erfolgen soll.

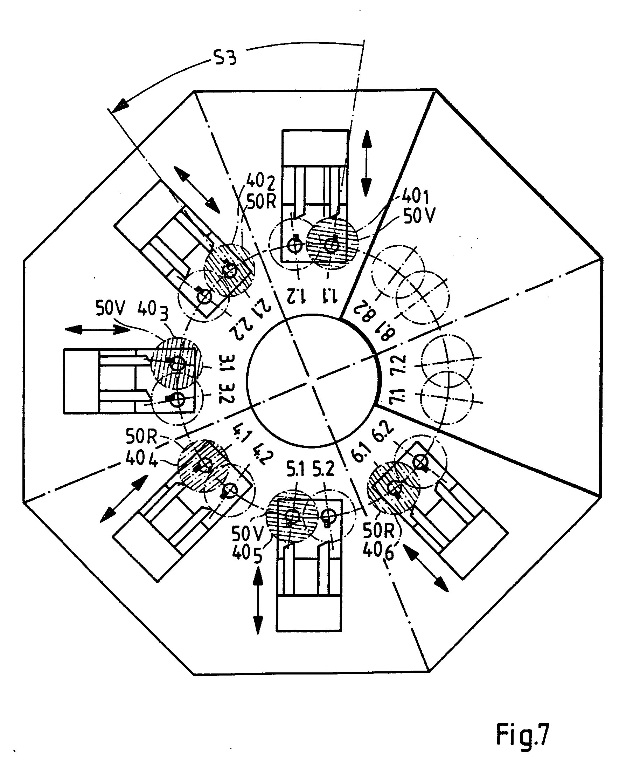

Bei einer dritten Variante des erfindungsgemäßen Verfahrens, wie beispielsweise in Fig. 7 dargestellt, sind die Werkstücke 50 auf unterschiedlichen Seiten gespannt. So ist beispielsweise in der Werkstückspindel 40₁ ein Werkstück 50V (azimutal schraffiert) derart gespannt, daß eine Vorderseitenbearbeitung derselben möglich ist, während in der nächstliegenden Werkstückspindel 40₂ ein Werkstück 50R (radial schraffiert) so gespannt ist, daß eine Rückseitenbearbeitung desselben möglich ist. Dies setzt sich über die weiteren Bearbeitungsstationen 3 bis 6 und Werkstückspindeln 40₃ bis 40₆ fort. So ist beispielsweise dann in der Werkstückspindel 40₃ das Werkstück 50V zur Vorderseitenbearbeitung, in der Werkstückspindel 40₄ das Werkstück 50R zur Rückseitenbearbeitung und so weiter bis zur Werkstückspindel 40₈ gespannt.

Bei der dritten Variante des erfindungsgemäßen Verfahrens, werden die Winkelschritte S₃ sowie der Werkstückzyklus und die Schrittfolge der ersten Variante beibehalten.

Wie in Fig. 6 und Tabelle 1 erkennbar ist, sind bei einem derartigen Verfahren zur Vorderseitenbearbeitung gespannte Werkstücke 50V und zur Rückseitenbearbeitung gespannte Werkstücke 50R aufeinanderfolgend in aufeinanderfolgenden Werkstückspindeln vorgesehen, wobei bei wiederholtem Durchführen der Winkelschritte S₃ die einzelnen Werkstücke 50V und 50R alle ersten Spindelpositionen 1.1 bis 8.1 aller Stationen 1 bis 8 durchlaufen und nach Ende des Zeitraums t₁ alle zweiten Spindelpositionen 1.2 bis 8.2.

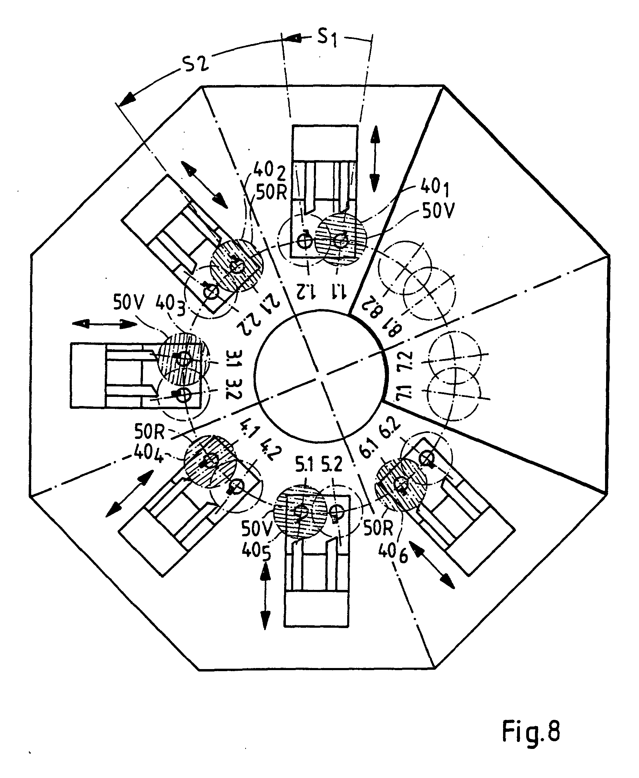

Bei einer vierten Variante des erfindungsgemäßen Verfahrens, dargestellt in Fig. 8, sind, wie bei der dritten Variante beschrieben, aufeinanderfolgende Werkstückspindeln 40₁ ... 40₈ abwechselnd mit Werkstücken 50V und 50R versehen.

Die Schrittfolge und die Winkelschritte entsprechen denen der zweiten Variante des erfindungsgemäßen Verfahrens und ergeben sich aus Fig. 6 sowie Tabelle 1 zusammen mit der Zahl der maximal einsetzbaren Werkzeuge in Abhängigkeit von der Zahl der Be- und Entladestationen.

Dreht man nun die Spindeltrommel 14 mit denselben Winkelschritten S₁ und S₂, wie im Zusammenhang mit dem Ausführungsbeispiel gemäß der zweiten Variante (Fig. 5) erläutert, so durchläuft jedes der Werkstücke 50V und 50R alle Spindelpositionen 1.1, 1.2, 2.1, ... bis 6.2, so daß jedes der Werkzeuge 52 und 54 so ausgebildet sein muß, daß es zur Vorderseitenbearbeitung und Rückseitenbearbeitung geeignet ist.

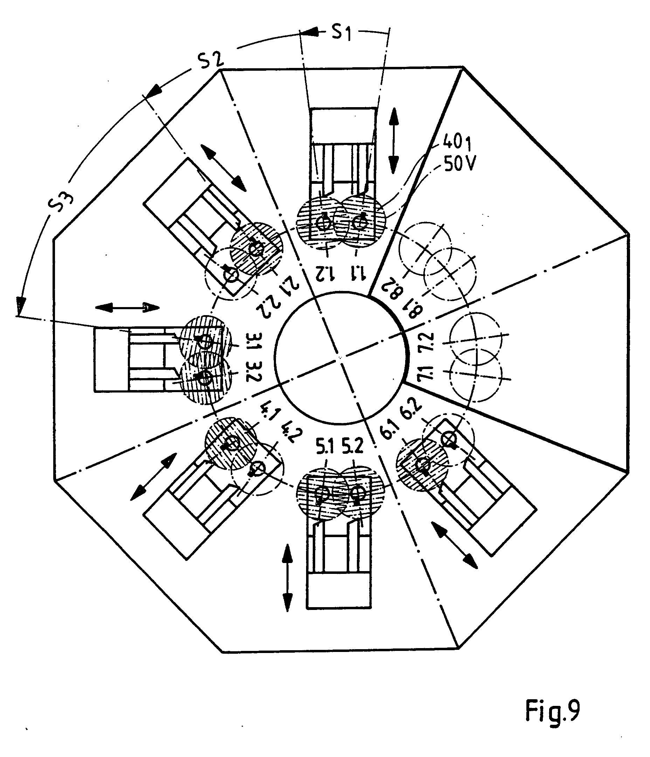

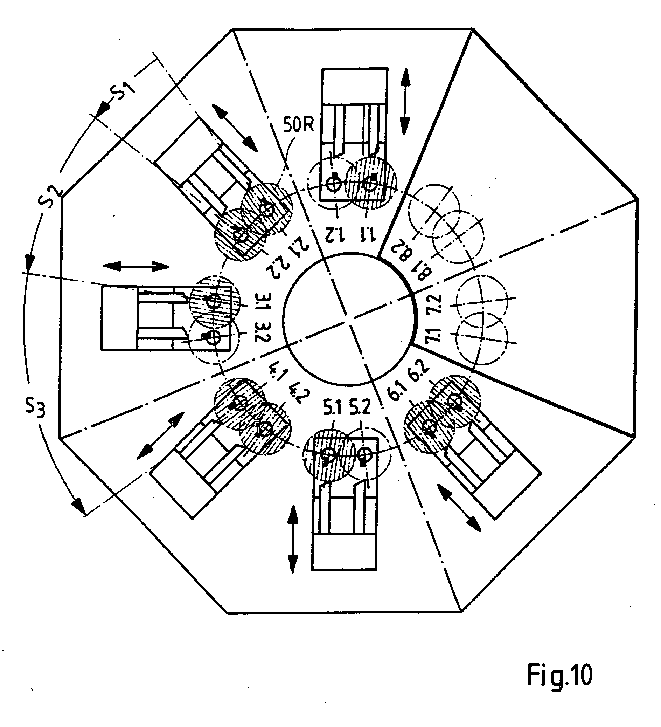

Bei einer Ausführungsform gemäß der fünften Variante der erfindungsgemäßen Lösung, beispielsweise dargestellt in Fig. 9 und 10, sind ebenfalls in in Azimutalrichtung aufeinanderfolgenden Werkstückspindeln 40₁ bis 40₈ Werkstücke 50V und 50R in der bereits im Zusammenhang mit Fig. 7 beschriebenen Art und Weise gespannt.

Wird die Spindeltrommel 14 nunmehr in der beschriebenen Art und Weise um die Schaltschritte S1 und S2 gedreht, so durchläuft beispielsweise das zunächst in der ersten Spindelposition 1.1 der ersten Station 1 stehende Werkstück 50V die erste Spindelposition 1.1 und die zweite Spindelposition 1.2 der ersten Bearbeitungsstation und dann anschließend die erste Spindelposition 2.1 der zweiten Bearbeitungsstation.

Im Anschluß daran erfolgt jedoch ein Winkelschritt S3 um 45°, so daß im Fall eines Beginns der Schrittfolge in der ersten Spindelposition einer Station die zweite Spindelposition 2.2 der nächstfolgenden Bearbeitungsstation 2 übersprungen wird. Hernach erfolgt wiederum ein Durchlaufen beider Spindelpositionen 3.1 und 3.2 in der Bearbeitungsstation 3 und in der Bearbeitungsstation 4 ein Überspringen der zweiten Spindelposition 4.2.

Ein auf seiner Vorderseite bearbeitbares Werkstück 50V durchläuft somit die Spindelpositionen 1.1 und 1.2, 2.1, 3.1 und 3.2, 4.1, 5.1 und 5.2, 6.1 aller Bearbeitungsstationen 1 bis 6 und überspringt jeweils die zweiten Spindelpositionen 2.2, 4.2 und 6.2.

In analoger Weise durchläuft, wie in Fig. 10 dargestellt, bei dieser Art der Bearbeitung das Werkstück 50R, welches zur Rückseitenbearbeitung vorgesehen ist und beispielsweise die Schrittfolge mit der Werkstückspindel 40₂ in der ersten Spindelposition 2.1 der Bearbeitungsstation 2 beginnt. Hier bewirken die Schaltschritte S1, S2 und S3, daß die Spindelpositionen 2.1, 2.2, 3.1, 4.1, 4.2, 5.1, 6.1, 6.2 und 7.1 bei einem Umlauf erreicht werden, jedoch nicht die Spindelposition 1.2, 3.2, 5.2. Vergleicht man Fig. 9 und Fig. 10, so ist erkennbar, daß in den Spindelpositionen 1.2, 3.2 und 5.2 Werkzeuge 52 und 54 vorgesehen sein können, welche ausschließlich der Bearbeitung der Werkstücke 50V dienen, während in den Spindelpositionen 2.2, 4.2 und 6.2 Werkstücke vorgesehen werden können, welche ausschließlich der Bearbeitung von Werkstücken 50R dienen, da diese Spindelposition von der Werkstücken 50V nicht erreicht werden.

Im Fall der fünften Variante umfaßt die Schrittfolge die Winkelschritte S₁, S₂ und S₃ und der Werkstückzyklus umfaßt beispielsweise vier solcher identischer Schrittfolgen.

Die Zahl der einsetzbaren Werkzeuge in Abhängigkeit von der Zahl der Stationen für das Be- und Entladen ergibt sich aus Tabelle 1 und Fig. 6.

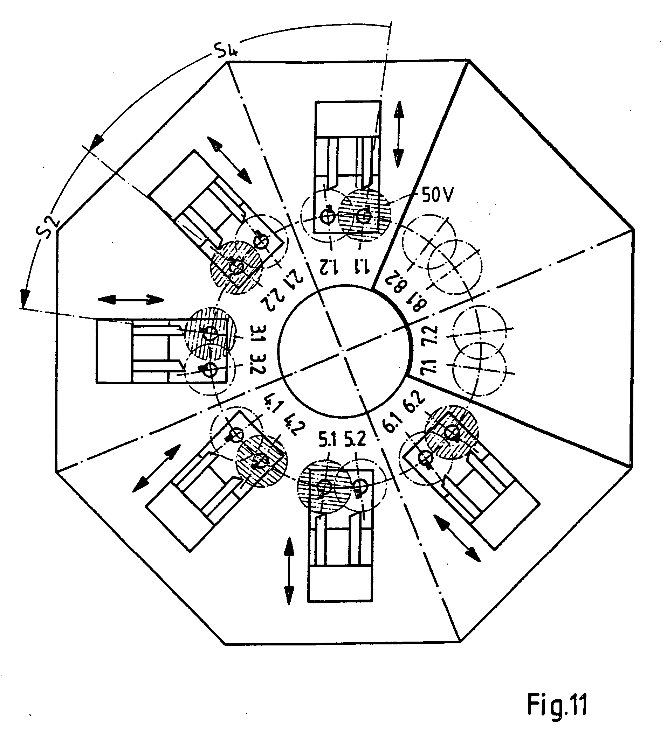

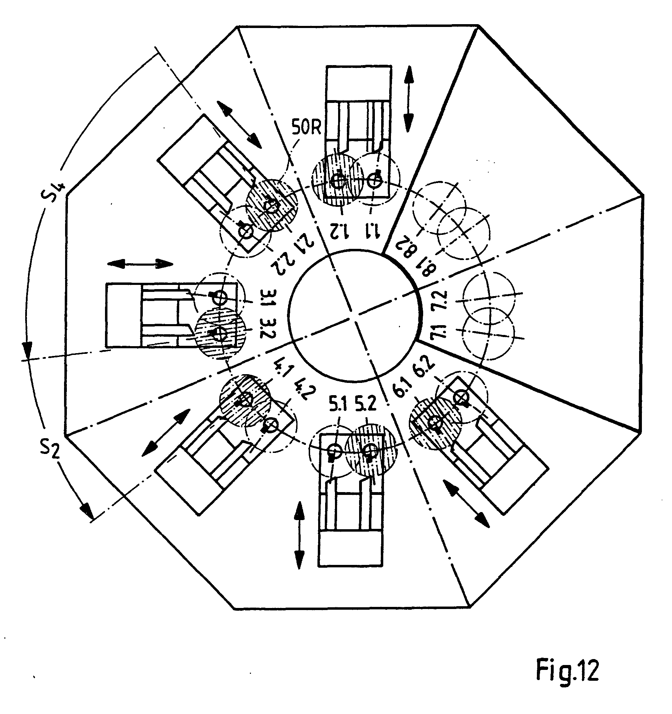

Wie bei einer sechsten Variante des erfindungsgemäßen Verfahrens in Fig. 11 und Fig. 12 dargestellt, ist es möglich, die Vorder- und Rückseitenbearbeitung auf die einzelnen Spindelpositionen vollständig aufzuteilen. Erfolgt nämlich ausgehend von einem Werkstück 50V in der Spindelposition 1.1 nach Bearbeiten desselben ein erster Winkelschritt S₄ derart, daß das Werkstück 50V von der Bearbeitungsposition 1.1 in die Spindelposition 2.2 bewegt wird und dann in die Bearbeitungsposition 3.1 mittels eines Winkelschritts S₂, so erkennt man, wie in Fig. 12 dargestellt, daß die gleichen Winkelschritte S₄ und S₂ angewandt auf das Werkstück 50R in der Spindelposition 2.1 zur Folge haben, daß dieses zunächst in die Spindelposition 3.2 und dann die Spindelposition 4.1 wandert.

Läßt man diese Winkelschritte S₄ und S₂ in einer Schrittfolge aufeinanderfolgen, so ist erkennbar, daß das Werkstück 50V lediglich die Spindelpositionen 1.1, 2.2, 3.1, 4.2, 5.1 und 6.2 durchwandert, nicht jedoch die Spindelpositionen 1.2, 2.1, 3.2, 4.1, 5.2 und 6.1 erreicht.

Dagegen durchwandert, wie in Fig. 12 dargestellt, das Werkstück 50R insgesamt die Spindelpositionen 1.2, 2.1, 3.2, 4.1, 5.2 und 6.1, nicht jedoch die Spindelpositionen 1.1, 2.2, 3.1, 4.2, 5.1 und 6.2, so daß insgesamt in den einzelnen Spindelpositionen 1.1 bis 6.2 entweder eine Bearbeitung eines der Werkstücke 50V oder eines der Werkstücke 50R erfolgen kann, so daß auch die in diesen einzelnen Spindelpositionen einsetzbaren Werkzeuge 52 und 54 den einzelnen Bearbeitungsaufgaben entweder der Vorderseite bei einem Werkstück 50V oder der Rückseite bei einem Werkstück 50R angepaßt werden können.

Die Schrittfolge bei der sechsten Variante umfaßt die Winkelschritte S₂ und S₄, wobei vier derartige Schrittfolgen einen Werkstückzyklus ergeben.

Die Zahl der bei der sechsten Variante einsetzbaren Werkzeuge in Abhängigkeit von der Zahl der für die Be- und Entladen vorgesehenen Stationen ergibt sich aus Fig. 6 in Verbindung mit Tabelle 1.

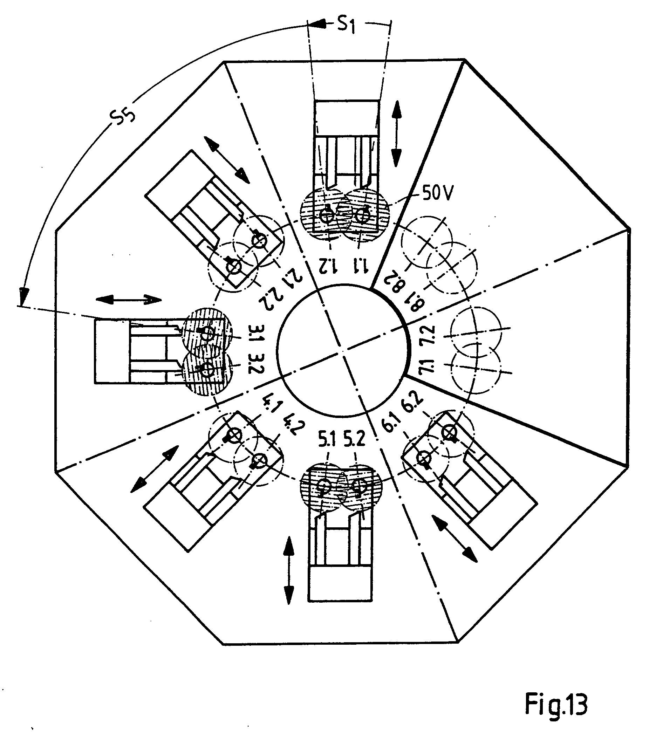

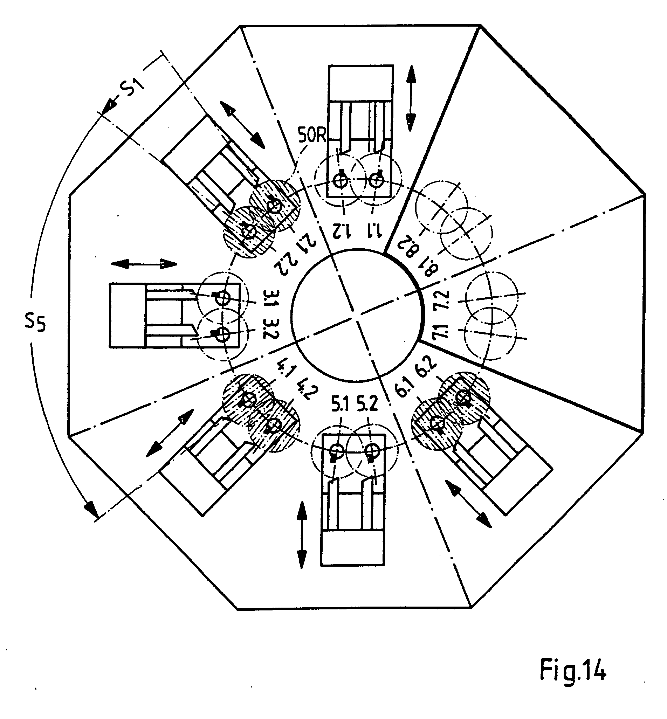

Mit einer siebten Variante des erfindungsgemäßen Verfahrens, läßt sich auch eine vollständige Aufteilung der Vorderseitenbearbeitung und der Rückseitenbearbeitung auf die einzelnen Spindelpositionen 1.1 bis 6.2 der Bearbeitungsstationen 1 bis 6 erreichen, wenn wie in Fig. 13 und 14 dargestellt, das Werkstück 50V ausgehend von der Spindelposition 1.1 durch einen Winkelschritt S₁ in die Spindelposition 1.2 gebracht wird, dann jedoch durch einen Winkelschritt S₅ in die Spindelposition 3.1, dann wieder durch einen Schaltschritt S₁ in die Spindelposition 3.2 usw. Damit wird insgesamt erreicht, daß das Werkstück 50V lediglich die Spindelpositionen 1.1 und 1.2, 3.1 und 3.2 sowie 5.1 und 5.2 durchläuft, das heißt alle Bearbeitungsstationen 1, 3 und 5, jedoch nicht die Spindelpositionen 2.1 und 2.2, 4.1 und 4.2. sowie 6.1 und 6.2 der Bearbeitungsstationen 2, 4 und 6 erreicht. Damit ist eine vollständige Aufteilung der Vorderseitenbearbeitung auf die Bearbeitungsstationen 1, 3 und 5 unter Ausnutzung der jeweils ersten und zweiten Spindelpositionen derselben möglich.

Im Gegensatz dazu erreicht bei Anwendung der gleichen Winkelschritte S₁ und S₅ das Werkstück 50R beginnend in der Spindelposition 2.1 lediglich noch die Spindelposition 2.2, 4.1 und 4.2 sowie 6.1 und 6.2, nicht jedoch die Spindelpositionen 1.1 und 1.2, 3.1 und 3.2, 5.1 und 5.2 der Bearbeitungsstationen 1, 3 und 5, welche von dem Werkstück 50V erreicht werden.

Insgesamt ist somit bei zyklischer sich wiederholender Anwendung der Winkelschritte S₁ und S₅ eine Aufteilung der Vorderseitenbearbeitung auf die Bearbeitungsstationen 1, 3 und 5 und der Rückseitenbearbeitung auf die Bearbeitungsstationen 2, 4 und 6 möglich, so daß die in den einzelnen Spindelpositionen dieser Bearbeitungsstationen zum Einsatz kommenden Werkzeuge 52 und/oder 54 jeweils der entsprechenden Bearbeitungsart anpaßbar sind.

Da bei der siebten Variante in einer Station nur Werkstücke 50V für Vorderseitenbearbeitung oder nur Werkstücke 50R für Rückseitenbearbeitung ankommen, ist zum Wechsel der Einspannung der Werkstücke 50 sowie zum Be- und Entladen roher bzw. zweiseitig fertigbearbeiteter Werkstücke 50 das Vorsehen zweier Stationen 7 und 8 erforderlich, so daß im Gegensatz zur sechsten Variante keine Möglichkeit besteht, hierzu nur eine Station, nämlich die Station 8, heranzuziehen, wie Tabelle 1 und Fig. 6 ebenfalls zeigen.

Bei der siebten Variante umfaßt die Schrittfolge die Winkelschritte S₁ und S₅ und insgesamt vier derartige Schrittfolgen ergeben einen Werkzeugzyklus.

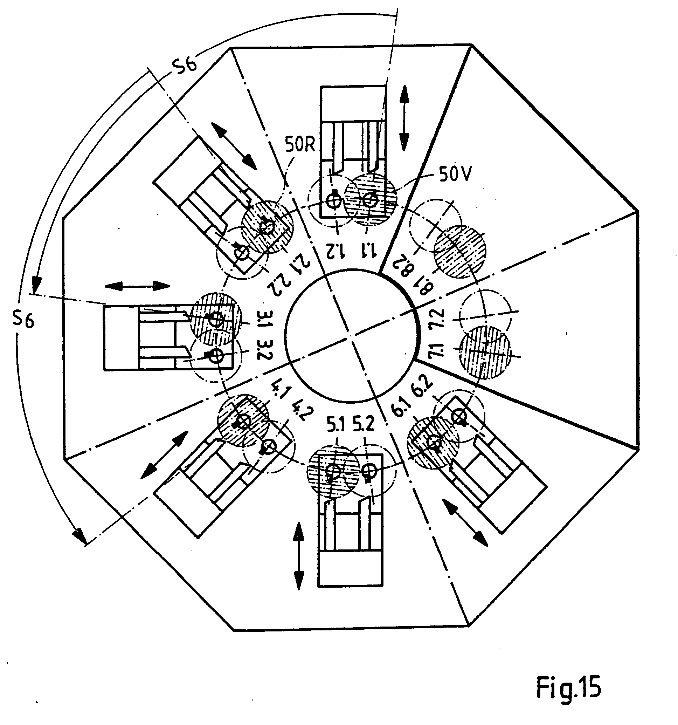

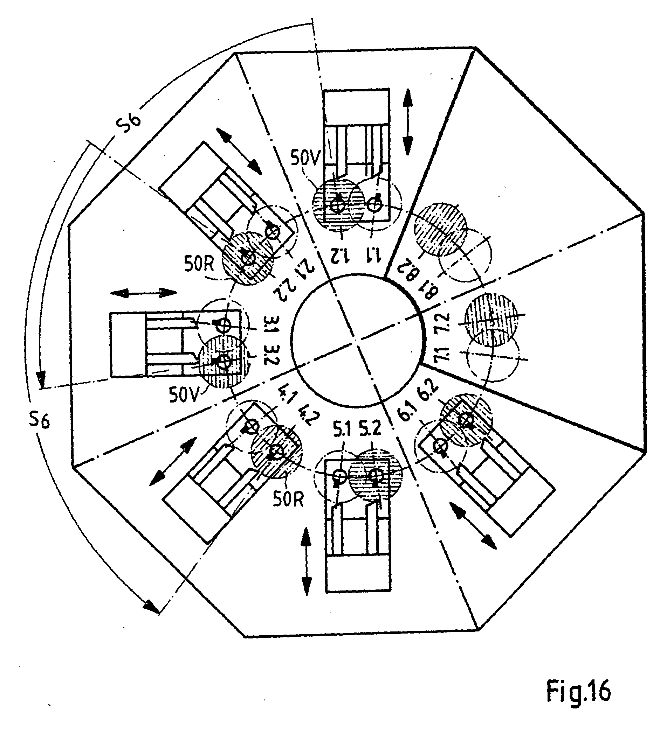

Bei einer achten Variante des erfindungsgemäßen Verfahrens, dargestellt in Fig. 15 und 16, wird die Spindeltrommel 14 um Winkelschritte S₆ gedreht, so daß bei Anordnung der Werkstücke 50V und 50R in den Werkstückspindeln 40₁ ...40₈ in der im Zusammenhang mit der dritten Variante erstmalig beschriebenen Weise einmal in den ersten Spindelpositionen 1.1, 3.1, 5.1, 7.1 von jeweils übernächsten Stationen 1, 3, 5 und 7 nur Werkstücke 50V zur Vorderseitenbearbeitung und das andere Mal in den ersten Spindelpositionen 2.1, 4.1, 6.1, 8.1 von um eine Station versetzt liegenden übernächsten Stationen 2, 4, 6 und 8 nur Werkstücke 50R zur Rückseitenbearbeitung ankommen, so daß ebenfalls eine Trennung der Spindelpositionen 1.1, 3.1 und 5.1, in denen nur Werkzeuge 52 und/oder 54 für die Vorderseitenbearbeitung zur Verfügung stehen, und der Spindelpositionen 2.1, 4.1, 6.1, in denen nur Werkzeuge 52 und/oder 54 für die Rückseitenbearbeitung zur Verfügung stehen, möglich ist.

Sind die Werkzeuge 52 und/oder 54 in den ersten Spindelpositionen 1.1 bis 6.1 nach einem Zeitraum t₁ verschlissen, so wird durch einen Winkelschritt S₁ von einer Bearbeitung der Werkstücke 50V und 50R in den ersten Spindelpositionen 1.1 bis 6.1 zu einer Bearbeitung der Werkstücke 50V und 50R in den zweiten Spindelpositionen 1.2 bis 6.2 gewechselt.

Da bei den in der achten Variante eingesetzten Winkelschritten die Werkstücke 50V und 50R stets in unterschiedlichen Stationen stehen, ist es erforderlich, für das Be- und Entladen von rohen Werkstücken 50 oder beidseitig bearbeiteten Werkstücken 50 zwei Stationen, nämlich beispielsweise die Stationen 7 und 8 vorzusehen.

Die Schrittfolge umfaßt nur den Winkelschritt S₆, so daß vier identische Schrittfolgen einen Werkstückzyklus ergeben, wobei die Zahl der einsetzbaren Werkzeuge auch für die achte Variante 6 beträgt, wenn nur eines der Werkzeuge 52 oder 54 eingesetzt wird, wie in Tabelle 1 sowie Fig. 6 dargestellt ist.

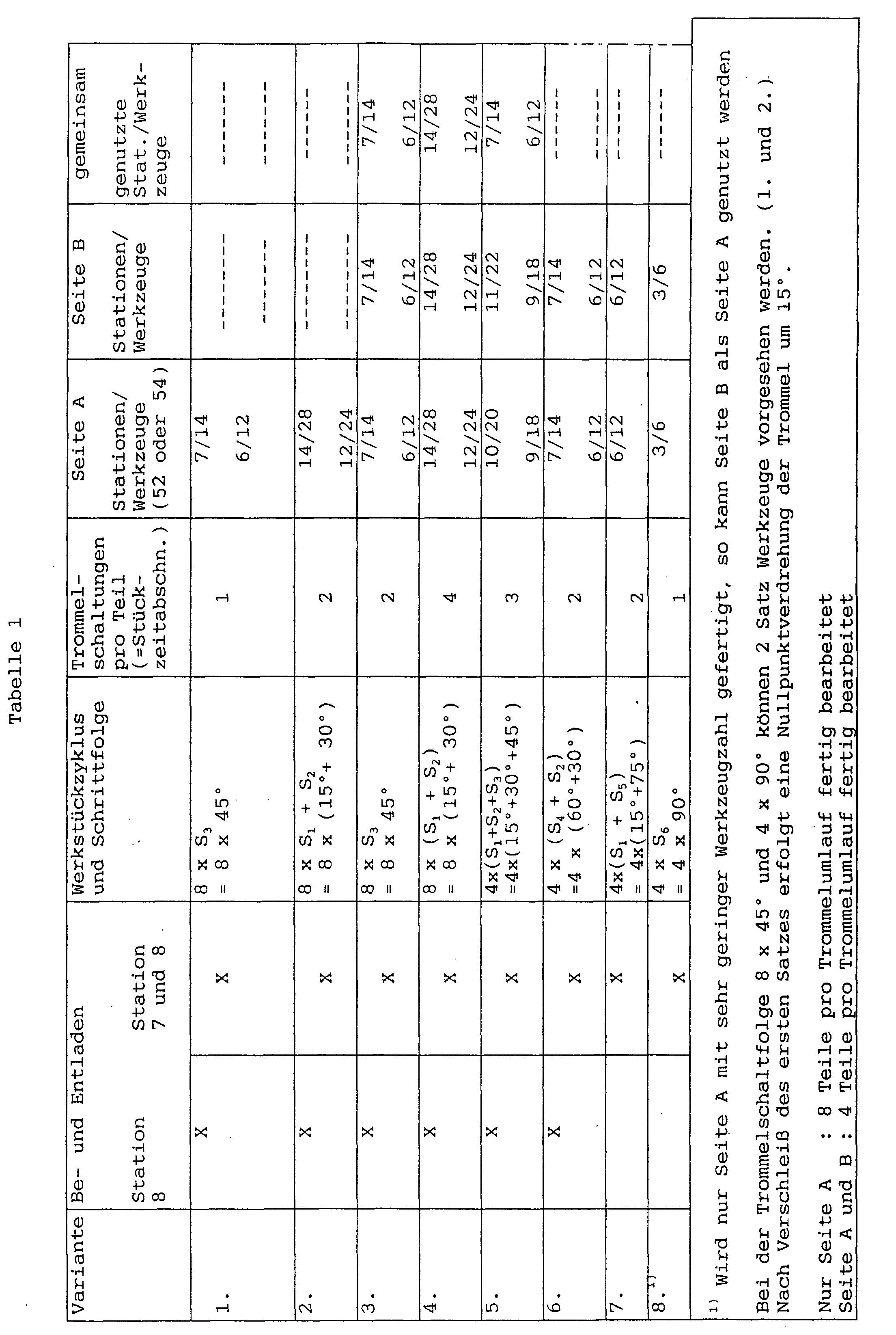

## Patentansprüche

1. Mehrspindeldrehmaschine umfassend ein Maschinengestell (12) eine relativ zum Maschinengestell (12) um eine Trommelachse (16) drehbar angeordnete Spindeltrommel (14) mit einer Anzahl von bezogen auf die Trommelachse (16) in definierten Winkelabständen (γ) angeordneten und bei einer Drehung der Spindeltrommel (14) relativ zum Maschinengestell (12) in einer Umlaufrichtung (23) bewegbaren Werkstückspindeln (40), die jeweils mit einer Werkstückaufnahme (46) für ein Werkstück (50) versehen sind, und eine der Anzahl der Werkstückspindeln (40) entsprechende Anzahl von am Maschinengestell (12) in Umlaufrichtung der Werkstückspindeln aufeinanderfolgend angeordneten Stationen (1 bis 8), die mindestens eine Bearbeitungsstation (1 bis 6) umfassen,
**dadurch gekennzeichnet,**
**daß** die mindestens eine Bearbeitungsstation (1 bis 6) zur Bearbeitung der Werkstücke (50) eine erste und eine zweite Spindelposition (1.1, 1.2; ...; 6.1, 6.2) aufweist, welche bezogen auf die Trommelachse (16) in einem Winkelabstand (α) voneinander angeordnet sind, daß die Spindeltrommel(14) derart drehbar ist, daß in jeder der Spindelpositionen (1.1, 1.2; ...; 6.1, 6.2) eine Werkstückspindel (40) mit einem Werkstück (50) positionierbar ist und daß jeder Spindelposition (1.1, 1.2; ...; 6.1, 6.2) ein eigenes Bearbeitungswerkzeug (52, 54) zugeordnet ist.

2. Mehrspindeldrehmaschine nach Anspruch 1, **dadurch gekennzeichnet, daß** mindestens zwei der Stationen (1 bis 8) als Bearbeitungsstationen mit jeweils einer ersten (1.1 bis 6.1) und einer zweiten Spindelposition (1.2 bis 6.2) ausgebildet sind.

3. Mehrspindeldrehmaschine nach einem der voranstehenden Ansprüche, **dadurch gekennzeichnet, daß** die übrigen Stationen (1 bis 8) mindestens eine Spindelposition aufweisen, welche entweder von der ersten oder der zweiten Spindelposition der mindestens einen Bearbeitungsstation einen Winkelabstand (γ) aufweist, der einem ganzzahligen Vielfachen von 360° geteilt durch die Anzahl der Werkstückspindeln (40) entspricht.

4. Mehrspindeldrehmaschine nach einem der voranstehenden Ansprüche, **dadurch gekennzeichnet, daß** alle Stationen (1 bis 8) jeweils dieselbe Anzahl Spindelpositionen (1.1, 1.2; ...; 8.1, 8.2) aufweisen.

5. Mehrspindeldrehmaschine nach Anspruch 4, **dadurch gekennzeichnet, daß** die in Umlaufrichtung (23) aufeinanderfolgenden ersten Spindelpositionen (1.1 ... 8.1) aller Stationen (1 bis 8) einen Winkelabstand (γ) von 360° geteilt durch die Anzahl der Werkstückspindeln (40) aufweisen.

6. Mehrspindeldrehmaschine nach Anspruch 4 oder 5, **dadurch gekennzeichnet, daß** die in Umlaufrichtung 23) aufeinanderfolgenden zweiten Spindelpositionen (1.2 ... 8.2) aller Stationen (1 bis 8) einen Winkelabstand (γ) von 360° geteilt durch die Anzahl der Werkstückspindeln (40) aufweisen.

7. Mehrspindeldrehmaschine nach einem der voranstehenden Ansprüche, **dadurch gekennzeichnet, daß** die der ersten (1.1 ... 6.1) und der zweiten Spindelpositionen (1.2 ... 6.2) der mindestens einen Bearbeitungsstation (1 bis 6) zugeordneten Werkzeuge (52, 54) auf zueinander parallelen Werkzeugbahnen (53) bewegbar sind.

8. Mehrspindeldrehmaschine nach Anspruch 7, **dadurch gekennzeichnet, daß** die parallelen Werkzeugbahnen (53) parallel zu einer zwischen der ersten (1.1 ... 6.1) und der zweiten Spindelposition (1.2 ... 6.2) liegenden radialen Richtung zur Trommelachse (16) verlaufen.

9. Mehrspindeldrehmaschine nach einem der voranstehenden Ansprüche, **dadurch gekennzeichnet, daß** das jeder Spindelposition (1.1 ... 6.2) zugeordnete Werkzeug (52, 54) bezogen auf die in dieser Spindelposition (1.1 ... 6.2) stehende Werkstückspindel (40) in einer X-Richtung relativ zu dieser bewegbar ist.

10. Mehrspindeldrehmaschine nach Anspruch 9, **dadurch gekennzeichnet, daß** bezogen auf eine werkstückspindelfeste Referenzposition des Werkstücks (50) die X-Richtung in der zweiten Spindelposition (1.2 ... 6.2) gegenüber der ersten Spindelposition (1.1 ... 6.1) um einen Winkel verdreht angeordnet ist und daß eine die Koordinaten einer Bearbeitung des Werkstücks (50) berechnende Steuerung (29) die Verdrehung berücksichtigt.

11. Mehrspindeldrehmaschine nach einem der voranstehenden Ansprüche, **dadurch gekennzeichnet, daß** die der ersten (1.1 ... 6.1) und der zweiten Spindelposition (1.2 ... 6.2) der Bearbeitungsstation (1 bis 6) zugeordneten Werkzeuge (52, 54) von einer gemeinsamen Positioniervorrichtung (60) positionierbar sind.

12. Mehrspindeldrehmaschine nach Anspruch 11, **dadurch gekennzeichnet, daß** die der ersten (1.1 ... 6.1) und der zweiten Spindelposition (1.2 ... 6.2) der Bearbeitungsstation (1 bis 6) zugeordneten Werkzeuge (52._{1.1}, 52_{1.2}; 54_{1.1}, 54_{1.2}) gleichzeitig durch die Positioniervorrichtung (60) bewegbar sind.

13. Mehrspindeldrehmaschine nach Anspruch 12, **dadurch gekennzeichnet, daß** die Positioniervorrichtung (60) ein Werkzeugschlitten ist, auf dem die der ersten (1.1 ... 6.1) und der zweiten Spindelposition (1.2 ... 6.2) der Bearbeitungsstation (1 bis 6) zugeordneten Werkzeuge (52, 54) angeordnet sind.

14. Mehrspindeldrehmaschine nach Anspruch 12 oder 13, **dadurch gekennzeichnet, daß** die Werkzeuge (52, 54) unbeweglich mit der Positioniervorrichtung (60) verbunden sind.

15. Mehrspindeldrehmaschine nach einem der Ansprüche 11 bis 14, **dadurch gekennzeichnet, daß** die Positioniervorrichtung (60) quer zu einer Trommelachse (16) bewegbar ist.

16. Mehrspindeldrehmaschine nach Anspruch 15, **dadurch gekennzeichnet, daß** die Positioniervorrichtung (60) in einer zur Trommelachse (16) radialen Richtung bewegbar ist.

17. Mehrspindeldrehmaschine nach einem der voranstehenden Ansprüche, **dadurch gekennzeichnet, daß** jeder Spindelposition (1.1 ... 6.2) zwei Werkzeuge (52, 54) zugeordnet sind.

18. Mehrspindeldrehmaschine nach Anspruch 17, **dadurch gekennzeichnet, daß** die beiden einer Spindelposition (1.1 ... 6.2) zugeordneten Werkzeuge (52, 54) gemeinsam bewegbar sind.

19. Mehrspindeldrehmaschine nach Anspruch 17 oder 18, **dadurch gekennzeichnet, daß** die beiden einer Spindelposition (1.1 ... 6.2) zugeordneten Werkzeuge (52, 54) längs einer gemeinsamen Werkzeugbahn (53) bewegbar sind.

20. Mehrspindeldrehmaschine nach einem der voranstehenden Ansprüche, **dadurch gekennzeichnet, daß** die erste (1.1 ... 6.1) und zweite Spindelposition (1.2 ... 6.2) der mindestens einen Bearbeitungsstation (1 bis 6) einen Winkelabstand (α) voneinander aufweisen, welcher ungleich dem Winkelabstand (β) zweier unmittelbar aufeinanderfolgender Spindelpositionen zweier verschiedener Stationen ist.

21. Mehrspindeldrehmaschine nach Anspruch 20, **dadurch gekennzeichnet, daß** die erste (1.1 ... 6.1) und die zweite Spindelposition (1.2 ... 6.2) der mindestens einen Bearbeitungsstation (1 bis 6) einen Winkelabstand (α) voneinander aufweisen, welcher kleiner ist als 360° geteilt durch die Anzahl der Spindelpositionen (1.1 ... 8.2) aller Stationen (1 bis 8).

22. Mehrspindeldrehmaschine nach Anspruch 20 oder 21, **dadurch gekennzeichnet, daß** die erste (1.1 ... 8.1) und die zweite Spindelposition (1.2 ... 8.2) einen Winkelabstand (α) voneinander aufweisen, welcher einem ganzzahligen Bruchteil des Winkelabstandes (β) zwischen zwei unmittelbar aufeinanderfolgenden Spindelpositionen (1.2, 2.1; ; 7.2, 8.1) zweier unmittelbar aufeinanderfolgenden Stationen (1,2; ...;7, 8) entspricht.

23. Mehrspindeldrehmaschine nach einem der voranstehenden Ansprüche, **dadurch gekennzeichnet, daß** der Winkelabstand (α) zwischen der ersten und der zweiten Spindelposition so gewählt ist, daß das in einer der Spindelpositionen (1.1, ... 6.2) stehende Werkstück (50) kollisionsfrei relativ zu dem Werkzeug (52, 54) in der anderen Spindelposition (1.1 ... 6.2) bearbeitbar ist.

24. Mehrspindeldrehmaschine nach einem der voranstehenden Ansprüche, **dadurch gekennzeichnet, daß** die Werkstückspindeln (40) und die Stationen (1 bis 8) in konstanten Winkelabständen (γ) voneinander an der Spindeltrommel (14) angeordnet sind.

25. Mehrspindeldrehmaschine nach einem der voranstehenden Ansprüche, **dadurch gekennzeichnet, daß** die Werkstückspindeln (40) in Richtung ihrer Spindelachse (42) relativ zur Spindeltrommel (14) bewegbar sind, um eine Z-Achsbewegung für die Bearbeitung des Werkstücks (50) zu erhalten.

26. Mehrspindeldrehmaschine nach einem der voranstehenden Ansprüche, **dadurch gekennzeichnet, daß** alle ersten Spindelpositionen (1.1 ... 6.1) aller Bearbeitungsstationen (1 bis 6) und alle zweiten Spindelpositionen (1.2 ... 6.2) aller Bearbeitungsstationen (1 bis 6) einen eigenen Satz von Werkzeugen (52, 54) aufweisen.

27. Mehrspindeldrehmaschine nach einem der voranstehenden Ansprüche, **dadurch gekennzeichnet, daß** in Umlaufrichtung (23) aufeinanderfolgend angeordnete Werkstückspindeln (40) abwechselnd mit einer Aufnahme(46) für eine erste Seite und einer Aufnahme (46) für eine zweite Seite des Werkstücks 50) versehen sind.

28. Mehrspindeldrehmaschine nach Anspruch 27, **dadurch gekennzeichnet, daß** alle Spindelpositionen (1.1 ... 6.2) aller Bearbeitungsstationen (1 bis 6) Werkzeuge (52, 54) sowohl für die erste Seite als auch für die zweite Seite des Werkstücks (50) aufweisen.

29. Mehrspindeldrehmaschine nach Anspruch 27, **dadurch gekennzeichnet, daß** eine der Spindelpositionen (1.1 ... 6.2) der mindestens einen Bearbeitungsstation (1 bis 6) ein ausschließlich eine der Seiten des Werkstücks (50) bearbeitendes Werkzeug (52, 54) aufweist.

30. Mehrspindeldrehmaschine nach Anspruch 29, **dadurch gekennzeichnet, daß** in der anderen Spindelposition (1.1 ... 6.2) der Bearbeitungsstation (1 bis 6) ein beide Seiten des Werkstücks (50) bearbeitendes Werkzeug (52, 54) angeordnet ist.

31. Mehrspindeldrehmaschine nach Anspruch 29, **dadurch gekennzeichnet, daß** in der anderen Spindelposition (1.1 ... 6.2) der Bearbeitungsstation (1 bis 6) ein ausschließlich die andere Seite des Werkstücks (50) bearbeitendes Werkzeug (52, 54) angeordnet ist.

32. Mehrspindeldrehmaschine nach Anspruch 29, **dadurch gekennzeichnet, daß** beiden Spindelpositionen (1.1, 1.2; ... 6.1, 6.2) einer der Bearbeitungsstationen (1 bis 6) Werkzeuge (52, 54) für nur die erste Seite des Werkstücks (50) und den beiden Spindelpositionen (1.1, 1.2 ... 6.1, 6.2) einer anderen Bearbeitungsstation 1 bis 6) Werkzeuge (52, 54) für nur die zweite Seite des Werkstücks (50) zugeordnet sind.

33. Mehrspindeldrehmaschine nach Anspruch 32, **dadurch gekennzeichnet, daß** die andere Bearbeitungsstation (1 bis 6) die auf die eine Bearbeitungsstation (1 bis 6) folgende Bearbeitungsstation ist.

34. Verfahren zum Herstellen von Drehteilen, bei welchem Werkstücke als Rohlinge in Werkstückaufnahmen einer Anzahl von an einer Spindeltrommel angeordneten und bei Drehung derselben um eine Spindeltrommelachse in einer Umlaufrichtung bewegbaren Werkstückspindeln aufgenommen und in mindestens einer Bearbeitungsstation bearbeitet werden, wobei die Bearbeitungsstation eine von einer der Anzahl der Werkstückspindeln entsprechenden Anzahl von aufeinanderfolgend angeordneten Stationen am Maschinengestell ist, **dadurch gekennzeichnet, daß** in der Bearbeitungsstation eine erste Bearbeitung mit einem ersten Werkzeug in einer ersten Spindelposition und eine zweite Bearbeitung mit einem zweiten Werkzeug in einer zweiten gegenüber der ersten Spindelposition in Umlaufrichtung im Winkelabstand angeordneten Spindelposition durchgeführt wird.

35. Verfahren nach Anspruch 34, **dadurch gekennzeichnet, daß** jede der Stationen mit einer ersten Spindelposition und einer zweiten Spindelposition versehen ist und die ersten Spindelpositionen und die zweiten Spindelpositionen jeweils untereinander in gleichen Winkelabständen angeordnet sind.

36. Verfahren nach 34 oder 35, **dadurch gekennzeichnet, daß** ein Werkstück mittels eines Werkstückzyklus gefertigt wird, welcher mindestens eine Schrittfolge mit mindestens einem Winkelschritt zur Drehung der Spindeltrommel aufweist.

37. Verfahren nach Anspruch 36, **dadurch gekennzeichnet, daß** der Werkstückzyklus mehrere identische Schrittfolgen umfaßt.

38. Verfahren nach Anspruch 36 oder 37, **dadurch gekennzeichnet, daß** jede Schrittfolge mehrere Winkelschritte unterschiedlicher Größe umfassen.

39. Verfahren nach einem der Ansprüche 35 bis 37, **dadurch gekennzeichnet, daß** der Werkstückzyklus nach einem Durchlauf einer bestimmten Zahl von Stationen beendet ist.

40. Verfahren nach einem der Ansprüche 36 bis 39, **dadurch gekennzeichnet, daß** die Summe der Winkelschritte einer Schrittfolge ein ganzzahliges Vielfaches von 360° geteilt durch die Anzahl der Werkstückspindeln beträgt.

41. Verfahren nach einem der Ansprüche 36 bis 40, **dadurch gekennzeichnet, daß** bei Durchführung der Werkstückzyklen während eines ersten Zeitraums mit den Werkstückspindeln nur die ersten Spindelpositionen angefahren werden und danach während eines zweiten Zeitraums nur die zweiten Spindelpositionen.

42. Verfahren nach Anspruch 41, **dadurch gekennzeichnet, daß** der erste Zeitraum durch die Abnutzung der Werkzeuge in den ersten Spindelpositionen bestimmt ist.

43. Verfahren nach Anspruch 41 oder 42, **dadurch gekennzeichnet, daß** der zweite Zeitraum durch die Abnutzung der Werkzeuge in den zweiten Spindelpositionen bestimmt ist.

44. Verfahren nach einem der Ansprüche 41 bis 43, **dadurch gekennzeichnet, daß** nach Ablauf des ersten Zeitraums eine Drehung der Spindeltrommel zum Wechsel der Positionierung der Werkstückspindeln von den auf die ersten Spindelpositionen fallenden Drehstellungen auf auf die zweiten Spindelpositionen fallenden Drehstellungen erfolgt.

45. Verfahren nach einem der Ansprüche 34 bis 39, **dadurch gekennzeichnet, daß** alle in Umlaufrichtung aufeinanderfolgenden Spindelpositionen in Umlaufrichtung nacheinander von den einzelnen Werkstückspindeln durchlaufen werden.

46. Verfahren nach einem der Ansprüche 34 bis 45, **dadurch gekennzeichnet, daß** die Werkstücke auf einer ersten Seite und auf einer zweiten Seite bearbeitet werden.

47. Verfahren nach Anspruch 46, **dadurch gekennzeichnet, daß** mit mindestens einem der Winkelschritte der Schrittfolge eine in Umlaufrichtung nächstfolgende Spindelposition übersprungen wird.

48. Verfahren nach Anspruch 47, **dadurch gekennzeichnet, daß** mit mindestens einem der Winkelschritte der Schrittfolge nur die in Umlaufrichtung nächstfolgende Spindelposition übersprungen wird.

49. Verfahren nach Anspruch 47, **dadurch gekennzeichnet, daß** mit dem Winkelschritt die zwei in Umlaufrichtung nächstfolgenden Spindelpositionen übersprungen werden.

50. Verfahren nach Anspruch 47, **dadurch gekennzeichnet, daß** mit dem Winkelschritt die drei in Umlaufrichtung nächstfolgenden Spindelpositionen übersprungen werden.

51. Verfahren nach einem der Ansprüche 47 bis 50, **dadurch gekennzeichnet, daß** jeder der Winkelschritte einer Schrittfolge dazu dient, eine nächstfolgende Spindelposition zu überspringen.

52. Verfahren nach einem der Ansprüche 47 bis 50, **dadurch gekennzeichnet, daß** mit einem der Winkelschritte ein Wechsel von einer Spindelposition zur in Umlaufrichtung nächstfolgenden Spindelposition erfolgt.

## Claims

1. Multiple-spindle turning machine comprising a machine frame (12), a spindle drum (14) arranged to rotate relative to the machine frame (12) around a drum axis (16), said spindle drum having a number of work piece spindles (40), which are arranged at defined angular distances (γ) relative to the drum axis (16) and, during a rotation of the spindle drum (14), movable in a direction of rotation (23) relative to the machine frame (12), said work piece spindles being respectively provided with a work piece receiving means (46) for a work piece (50), and a number of stations (1 to 8) arranged consecutively on the machine frame (12) in the direction of rotation of the work piece spindles and corresponding to the number of work piece spindles (40), said stations comprising at least one machining station (1 to 6), **characterised in that** for machining the work pieces (50), the at least one machining station (1 to 6) has a first and a second spindle position (1.1, 1.2; ..; 6.1, 6.2), which are arranged at an angular distance (α) from one another relative to the drum axis (16), that the spindle drum (14) is rotatable in such a manner that a work piece spindle (40) with a work piece (50) is positionable in each of the spindle positions (1.1, 1.2; ..; 6.1, 6.2), and that each spindle position (1.1, 1.2; ..; 6.1, 6.2) is provided with its own machining tool (52, 54).

2. Multiple-spindle turning machine according to Claim 1, **characterised in that** at least two of the stations (1 to 8) are constructed as machining stations with a first (1.1 to 6.1) and a second spindle position (1.2 to 6.2) respectively.

3. Multiple-spindle turning machine according to one of the preceding claims, **characterised in that** the other stations (1 to 8) have at least one spindle position which has an angular distance (γ) from either the first or the second spindle position of the at least one machining station which corresponds to an integral multiple of 360° divided by the number of work piece spindles (40).

4. Multiple-spindle turning machine according to one of the preceding claims, **characterised in that** all the stations (1 to 8) respectively have the same number of spindle positions (1.1, 1.2; ..; 8.1, 8.2).

5. Multiple-spindle turning machine according to Claim 4, **characterised in that** the first spindle positions (1.1 .. 8.1), arranged consecutively in the direction of rotation (23), of all stations (1 to 8) have an angular distance (γ) of 360° divided by the number of work piece spindles (40).

6. Multiple-spindle turning machine according to Claim 4 or 5, **characterised in that** the second spindle positions (1.2 .. 8.2), arranged consecutively in the direction of rotation (23), of all stations (1 to 8) have an angular distance (γ) of 360° divided by the number of work piece spindles (40).

7. Multiple-spindle turning machine according to one of the preceding claims, **characterised in that** the tools (52, 54) provided for the first (1.1 .. 6.1) and the second spindle positions (1.2 .. 6.2) of the at least one machining station (1 to 6) are movable on parallel tool paths (53).

8. Multiple-spindle turning machine according to Claim 7, **characterised in that** the parallel tool paths (53) run parallel to a direction radial to the drum axis (16) located between the first (1.1 .. 6.1) and the second spindle position (1.2 .. 6.2).

9. Multiple-spindle turning machine according to one of the preceding claims, **characterised in that** the tool (52, 54) provided for each spindle position (1,1 .. 6.2) is movable in relation to the tool spindle (40) standing in this spindle position (1.1 .. 6.2) in an X-direction relative to this.

10. Multiple-spindle turning machine according to Claim 9, **characterised in that**, in relation to a reference position of the work piece (50) fixed with respect to the work piece spindle, the X-direction in the second spindle position (1.2 .. 6.2) is rotated by an angle relative to the first spindle position (1.1, .. 6.1), and that a control means (29) calculating the coordinates of a machining of the work piece (50) takes into account the rotation.

11. Multiple-spindle turning machine according to one of the preceding claims, **characterised in that** the tools (52, 54) provided for the first (1.1 .. 6.1) and the second spindle position (1.2 .. 6.2) of the machining station (1 to 6) are positionable by a joint positioning device (60).

12. Multiple-spindle turning machine according to Claim 11, **characterised in that** the tools (52_{1.1}, 52_{1.2}; 54_{1.1}, 54_{1.2}) provided for the first (1.1 .. 6.1) and the second spindle position (1.2 .. 6.2) of the machining station (1 to 6) are movable simultaneously by means of the positioning device (60).

13. Multiple-spindle turning machine according to Claim 12, **characterised in that** the positioning device (60) is a tool carriage, on which the tools (52, 54) provided for the first (1.1 .. 6.1) and the second spindle position (1.2 .. 6.2) of the machining station (1 to 6) are disposed.

14. Multiple-spindle turning machine according to Claim 12 or 13, **characterised in that** the tools (52, 54) are immovably connected to the positioning device (60).

15. Multiple-spindle turning machine according to one of Claims 11 to 14, **characterised in that** the positioning device (60) is movable transversely to a drum axis (16).

16. Multiple-spindle turning machine according to Claim 15, **characterised in that** the positioning device(60) is movable in a direction radial to the drum axis (16).

17. Multiple-spindle turning machine according to one of the preceding claims, **characterised in that** two tools (52, 54) are provided for each spindle position (1.1 .. 6.2).

18. Multiple-spindle turning machine according to Claim 17, **characterised in that** the two tools (52, 54) provided for a spindle position (1.1 .. 6.2) are jointly movable.

19. Multiple-spindle turning machine according to Claim 17 or 18, **characterised in that** the two tools (52, 54) provided for a spindle position (1.1 .. 6.2) are movable along a joint tool path (53).

20. Multiple-spindle turning machine according to one of the preceding claims, **characterised in that** the first (1.1 .. 6.1) and second spindle position (1.2 .. 6.2) of the at least one machining station (1 to 6) have an angular distance (α) from one another, which does not equal the angular distance (β) of two directly consecutive spindle positions of two different stations.

21. Multiple-spindle turning machine according to Claim 20, **characterised in that** the first (1.1 .. 6.1) and the second spindle position (1.2 .. 6.2) of the at least one machining station (1 to 6) have an angular distance (α) from one another, which is smaller than 360° divided by the number of spindle positions (1.1 .. 8.2) of all stations (1 to 8).

22. Multiple-spindle turning machine according to Claim 20 or 21, **characterised in that** the first (1.1 .. 8.1) and the second spindle position (1.2 .. 8.2) have an angular distance (α) from one another, which corresponds to an integral fraction of the angular distance (β) between two directly consecutive spindle positions (1.2, 2.1; ..; 7.2, 8.1) of two directly consecutive stations (1, 2; ..; 7, 8).

23. Multiple-spindle turning machine according to one of the preceding claims, **characterised in that** the angular distance (α) between the first and the second spindle position is selected so that the work piece (50) standing in one of the spindle positions (1.1 .. 6.2) may be machined in a collision-free manner relative to the tool (52, 54) in the other spindle position (1.1 .. 6.2).

24. Multiple-spindle turning machine according to one of the preceding claims, **characterised in that** the work piece spindles (40) and the stations (1 to 8) are arranged at constant angular distances (γ) from one another on the spindle drum (14).

25. Multiple-spindle turning machine according to one of the preceding claims, **characterised in that** the work piece spindles (40) are movable in the direction of their spindle axis (42) relatively to the spindle drum (14) in order to achieve a Z-axis movement for machining the work piece (50).

26. Multiple-spindle turning machine according to one of the preceding claims, **characterised in that** all the first spindle positions (1.1 .. 6.1) of all the machining stations (1 to 6) and all the second spindle positions (1.2 .. 6.2) of all the machining stations (1 to 6) have their own set of tools (52, 54).

27. Multiple-spindle turning machine according to one of the preceding claims, **characterised in that** work piece spindles (40) arranged consecutively in the direction of rotation (23) are alternately provided with a receiving means (46) for a first side and a receiving means (46) for a second side of the work piece (50).

28. Multiple-spindle turning machine according to Claim 27, **characterised in that** all the spindle positions (1.1 .. 6.2) of all the machining stations (1 to 6) have tools (52, 54) for both the first side and the second side of the work piece (50).

29. Multiple-spindle turning machine according to Claim 27, **characterised in that** one of the spindle positions (1.1 .. 6.2) of the at least one machining station (1 to 6) has a tool (52, 54) machining only one of the sides of the work piece (50).

30. Multiple-spindle turning machine according to Claim 29, **characterised in that** a tool (52, 54) machining both sides of the work piece (50) is arranged in the other spindle position (1.1 .. 6.2) of the machining station (1 to 6).

31. Multiple-spindle turning machine according to Claim 29, **characterised in that** a tool (52, 54) only machining the other side of the work piece (50) is arranged in the other spindle position (1.1 .. 6.2) of the machining station (1 to 6).

32. Multiple-spindle turning machine according to Claim 29, **characterised in that** tools (52, 54) only for the first side of the work piece (50) are provided for both spindle positions (1.1, 1.2; ..; 6.1, 6.2) of one of the machining stations (1 to 6) and tools (52, 54) only for the second side of the work piece (50) are provided for the two spindle positions (1.1, 1.2; ..; 6.1, 6.2) of another machining station (1 to 6).

33. Multiple-spindle turning machine according to Claim 32, **characterised in that** the other machining station (1 to 6) is the machining station following the one machining station (1 to 6).

34. Process for the production of turned parts, in which work pieces are received as blanks in work piece receiving means of a number of work piece spindles, which are arranged on a spindle drum and upon rotation thereof are movable in a direction of rotation around a spindle drum axis, and are machined in at least one machining station, the machining station being one of a number of stations arranged consecutively on the machine frame corresponding to the number of work piece spindles, **characterised in that** a first machining operation is carried out in the machining station with a first tool in a first spindle position, and a second machining operation is carried out with a second tool in a second spindle position arranged at an angular distance relative to the first spindle position in the direction of rotation.

35. Process according to Claim 34, **characterised in that** each of the stations is provided with a first spindle position and a second spindle position, and the first spindle positions and the second spindle positions are arranged one with respect to the other at equal angular distances.

36. Process according to 34 or 35, **characterised in that** a work piece is produced by means of a work piece cycle, which has at least one step sequence with at least one angle step for rotation of the spindle drum.

37. Process according to Claim 36, **characterised in that** the work piece cycle comprises several identical step sequences.

38. Process according to Claim 36 or 37, **characterised in that** each step sequence comprises several angle steps of different magnitude.

39. Process according to one of Claims 35 to 37, **characterised in that** the work piece cycle is ended after passage through a specific number of stations.

40. Process according to one of Claims 36 to 39, **characterised in that** the sum of the angle steps of a step sequence amounts to an integral multiple of 360° divided by the number of work piece spindles.

41. Process according to one of Claims 36 to 40, **characterised in that**, when conducting the work piece cycles during a first period of time with the work piece spindles, only the first spindle positions are used, and thereafter only the second spindle positions are used during a second period of time.

42. Process according to Claim 41, **characterised in that** the first period of time is determined by wear of the tools in the first spindle positions.

43. Process according to Claim 41 or 42, **characterised in that** the second period of time is determined by wear of the tools in the second spindle positions.

44. Process according to one of Claims 41 to 43, **characterised in that** after expiry of the first period of time, a rotation of the spindle drum occurs to change the position of the work piece spindles from the rotational positions falling to the first spindle positions to rotational positions falling to the second spindle positions.

45. Process according to one of Claims 34 to 39, **characterised in that** the individual work piece spindles are passed one after the other in the direction of rotation through all the spindle positions arranged consecutively in the direction of rotation.

46. Process according to one of Claims 34 to 45, **characterised in that** the work pieces are machined on a first side and on a second side.

47. Process according to Claim 46, **characterised in that** a next following spindle position in the direction of rotation is skipped with at least one of the angle steps of the step sequence.

48. Process according to Claim 47, **characterised in that** only the next following spindle position in the direction of rotation is skipped with at least one of the angle steps of the step sequence.

49. Process according to Claim 47, **characterised in that** the two next following spindle positions in the direction of rotation are skipped with the angle step.

50. Process according to Claim 47, **characterised in that** the three next following spindle positions in the direction of rotation are skipped with the angle step.

51. Process according to one of Claims 47 to 50, **characterised in that** each of the angle steps of a step sequence serves to skip a next following spindle position.

52. Process according to one of Claims 47 to 50, **characterised in that** a change occurs from one spindle position to the next following spindle position in the direction of rotation with one of the angle steps.

## Revendications

1. Tour multibroche comprenant un bâti machine (12), un tambour à broches (14), disposé de façon à pouvoir tourner autour d'un axe de tambour (16) par rapport au bâti machine (12), avec une pluralité de broches d'outil (40) disposées sous des espacements angulaires (γ) définis par rapport à l'axe de tambour (16) et déplaçables par rapport au bâti machine (12) dans une direction de circulation (23) à l'occasion d'une rotation du tambour de broche (14), broches d'outil qui sont chacune munies d'un réceptacle de pièce (46), pour une pièce (50), et comprennent un nombre, de postes (1 à 8) correspondant à la pluralité de broches à pièce (40), disposés sur le bâti machine (12) en se suivant les uns les autres dans la direction périphérique des broches à pièce, les postes comprenant au moins un poste d'usinage (1 à 6),
**caractérisé en ce que**
le au moins un poste d'usinage (1 à 6) présente, pour assurer l'usinage des pièces (50), une première et une deuxième position de broche (1.1, 1.2; ...; 6.1, 6.2), qui par rapport à l'axe de tambour (16) sont disposées les unes par rapport aux autres selon un espacement angulaire (α), **en ce que** le tambour à broche (14) est susceptible de tourner de manière qu'une broche à pièce (40) chargée avec une pièce (50) est susceptible d'être positionnée dans chacune des positions de broche (1.1, 1.2; ...; 6.1, 6.2), et **en ce qu'**à chaque position de broche (1.1, 1.2; ...; 6.1, 6.2), est associé un outil d'usinage (52, 54) propre.

2. Tour multibroche selon la revendication 1, **caractérisé en ce qu'**au moins deux des postes (1 à 8) sont réalisés sous la forme de postes d'usinage, avec chaque fois une première (1.1 à 6.1) et une deuxième position de broche (1.2 à 6.2).

3. Tour multibroche selon l'une des revendications précédentes, **caractérisé en ce que** les autres postes (1 à 8) présentent au moins une position de broche qui présente un espacement angulaire (γ) par rapport à une première ou une deuxième position de broche du au moins un poste d'usinage, espacement angulaire correspondant à un multiple entier de 360°, divisé par le nombre des broches à pièce (40).

4. Tour multibroche selon l'une des revendications précédentes, **caractérisé en ce que** tous les postes (1 à 8) présentent chacun le même nombre de positions de broche (1.1, 1.2; ...; 8.1, 8.2).

5. Tour multibroche selon la revendication 4, **caractérisé en ce que** les premières positions de broche (1.1 ... 8.1), se suivant les unes les autres dans la direction de circulation (23) de tous les postes (1 à 8), ont un espacement angulaire (γ) de 360°, divisé par le nombre des broches à pièce (40).

6. Tour multibroche selon la revendication 4 ou 5, **caractérisé en ce que** les deuxièmes positions (1,2 ... 8.2) se suivant en direction de circulation 823) de tous les postes (1 à 8) ont un espacement angulaire (γ) de 360°, divisé par le nombre des broches à pièces (40).

7. Tour multibroche selon l'une des revendications précédentes, **caractérisé en ce que** les outils (52, 54) associés à la première position de broche (1.1 ... 6.1) et à la deuxième position de broche (1.2 ... 6.2) du au moins un poste d'usinage (1 à 6) sont déplaçables sur des trajectoires d'outil (53) parallèles entre elles.

8. Tour multibroche selon la revendication 7, **caractérisé en ce que** les trajectoires d'outils (53) parallèles s'étendent, parallèlement à une direction radiale par rapport à l'axe de tambour (16), la direction radiale étant située entre la première position de broche (1.1 ... 6.1) et la deuxième position de broche (1.2 ... 6.2).

9. Tour multibroche selon l'une des revendications précédentes, **caractérisé en ce que** l'outil (52, 54) associé à chaque position de broche (1.1 ... 6.2), en se référant à la broche à pièce (40) placée dans cette position de broche (1.1 ... 6.2), est déplaçable en une direction X par rapport à celle-ci.

10. Tour multibroche selon la revendication 9, **caractérisé en ce que**, en se référant à une position de référence fixe par rapport à la broche à pièce de la pièce (40), la direction X est tournée d'un angle dans la deuxième position de broche (1.2 ... 6.2) par rapport à la première position de broche (1.1 ... 6.1), et **en ce qu'**une commande (29), calculant les coordonnées d'un usinage de la pièce (50), prend en considération la rotation.

11. Tour multibroche selon l'une des revendications précédentes, **caractérisé en ce que** les outils (52, 54) associés à la première position de broche (1.1 ... 6.1) et à la deuxième position de broche (1.2 ... (6.2) du poste d'usinage (1 à 6) sont positionnables par un dispositif de positionnement (60) commun.

12. Tour multibroche selon la revendication 11, **caractérisé en ce que** les outils (51._{1.1}, 52._{1.2}; 54._{1.1}, 54._{1.2}), associés à la première position de broche (1.1 ... 6.1) et à la deuxième position de broche (1.2 ... 6.2) du poste d'usinage (1 à 6), sont déplaçables simultanément par le dispositif de positionnement (60).

13. Tour multibroche selon la revendication 12, **caractérisé en ce que** le dispositif de positionnement (60) est un chariot porte-outil, sur lequel sont disposés les outils (52, 54) associés à la première position de broche (1.1 ... 6.1) et la deuxième position de broche (1.2 ... 6.2) du poste d'usinage (1 à 6).

14. Tour multibroche selon la revendication 12 ou 13, **caractérisé en ce que** les outils (52, 54) sont reliés de façon solidaire au dispositif de positionnement (60).

15. Tour multibroche selon l'une des revendications 11 à 14, **caractérisé en ce que** le dispositif de positionnement (60) est déplaçable transversalement par rapport à l'axe de tambour (16).

16. Tour multibroche selon la revendication 15, **caractérisé en ce que** le dispositif de fonctionnement (60) est déplaçable dans une direction radiale par rapport à l'axe de tambour (16).

17. Tour multibroche selon l'une des revendications précédentes, **caractérisé en ce que** deux outils (52, 54) sont associés à chaque position de broche (1.1 ... 6.2).

18. Tour multibroche selon la revendication 17, **caractérisé en ce que** les deux outils (52, 54) associés à une position de broche (1.1 ... 6.2) sont déplaçables conjointement.

19. Tour multibroche selon la revendication 17 ou 18, **caractérisé en ce que** les deux outils (52 ,54) associés à une position de broche (1.1 ... 1.2) sont déplaçables le long d'une trajectoire d'outil (53) commune.

20. Tour multibroche selon l'une des revendications précédentes, **caractérisé en ce que** la première position de broche (1.1 ... 6.1) et la deuxième position de broche (1.2 ... 6.2) du au moins un poste d'usinage (1 à 6) présentent un espacement angulaire (α) l'une de l'autre, qui est différent de l'espacement angulaire (β) entre deux positions de broche directement successives de deux postes différents.

21. Tour multibroche selon la revendication 20, **caractérisé en ce que** la première position de broche (1.1 ... 6.1) et la deuxième position de broche (1.2 ... 6.2) du au moins un poste d'usinage (1 à 6) présentent un espacement angulaire (α) l'un par rapport à l'autre, qui est inférieur à 360°, divisé par le nombre des positions de broche (1.1 ... 8.2) de tous les postes (1 à 8).

22. Tour multibroche selon la revendication 20 ou 21, **caractérisé en ce que** la première position de broche (1.1 ... 8.1) et la deuxième position de broche (1.2 ... 8.2) présentent un espacement angulaire (α) l'un de l'autre, qui correspond à une fraction en nombre entier de l'espacement angulaire (β) entre deux positions de broche (1.2, 2.1; ; 7.2; 8.1) directement successives de deux postes (1.2; ...; 7, 8) se suivant directement.

23. Tour multibroche selon l'une des revendications précédentes, **caractérisé en ce que** l'espacement angulaire (α) entre la première position de broche et la deuxième position de broche est choisi tel que la pièce (50) placée en l'une des positions de broche (1.1 ... 6.2) est susceptible d'être usinée sans collision par rapport à l'outil (52, 54) situé en l'autre position de broche (1.1 ... 6.2).

24. Tour multibroche selon l'une des revendications précédentes, **caractérisé en ce que** les broches à pièce (40) et les postes (1 à 8) sont disposées sous des espacements angulaires (γ) constants les uns par rapport aux autres sur le tambour de broche (14).

25. Tour multibroche selon l'une des revendications précédentes, **caractérisé en ce que** les broches à pièce (40) sont déplaçables dans la direction de leurs axes de broche (42) par rapport au tambour de broche (14), afin d'obtenir un déplacement selon l'axe Z pour l'usinage de la pièce (50).

26. Tour multibroche selon l'une des revendications précédentes, **caractérisé en ce que** la totalité des premières positions de broche (1.1 ... 6.1) de tous les postes d'usinage (1 à 6) et la totalité des deuxièmes positions de broche (1.2 ... 6.2) de tous les postes d'usinage (1 à 6) présentent un jeu propre d'outils (52, 54).

27. Tour multibroche selon l'une des revendications précédentes, **caractérisé en ce que** des broches à pièce (40) disposées à la suiLe les unes des autres en direction périphérique (23) sont munies en alternance d'un réceptacle (46) pour une première face et d'un réceptacle (46) pour une deuxième face de la pièce 850).

28. Tour multibroche selon la revendication 27, **caractérisé en ce que** toutes les positions de broche (1.1 ... 6.2) de tous les postes d'usinage (1 à 6) présentent des outils (52, 54), tant pour la première face que pour la deuxième face de la pièce (50).

29. Tour multibroche selon la revendication 27, **caractérisé en ce que** l'une des positions de broche (1.1 ... 6.2) du au moins un poste d'usinage (1 à 6) présente un outil (52, 54) usinant exclusivement l'une des faces de la pièce (50).

30. Tour multibroche selon l'une la revendication 29, **caractérisé en ce que** dans l'autre position de broche (1.1 ... 6.2) du poste d'usinage (1 à 6) est disposé un outil (52, 54) usinant les deux faces de la pièce (50).

31. Tour multibroche selon la revendication 29, **caractérisé en ce que**, dans l'autre position de broche (1.1 ... 6.2) du poste d'usinage (1 à 6) est disposé un outil (52, 54), usinant exclusivement l'autre face de la pièce (50).

32. Tour multibroche selon la revendication 29, **caractérisé en ce que**, **caractérisé en ce que**, aux deux positions de broche (1.1, 1.2; ... 6.1, 6.2) d'un des postes d'usinage (1 à 6), sont associés des outils (52, 54) pour usiner uniquement la première face de la pièce (50) et, aux deux positions de broche (1.1, 1.2; ... 6.1, 6.2) d'un autre poste d'usinage (1 à 6), sont associés des outils (52, 54) pour usiner uniquement la deuxième face de la pièce (50).

33. Tour multibroche selon la revendication 32, **caractérisé en ce que** l'autre poste d'usinage (1 à 6) est un poste d'usinage qui suit un poste d'usinage (1 à 6).

34. Procédé de fabrication de pièce tournée, pour lequel les pièces tournées se présentant sous forme d'ébauche, sont logées dans des réceptacles pour pièce d'une pluralité de broches à pièce disposées sur un tambour de broche et déplaçables dans une direction de circulation autour d'un axe de tambour de broche, en cas de rotation de ceux-ci, et sont usinées en au moins un poste d'usinage, le poste d'usinage étant formé d'un nombre, correspondant au nombre de broches à pièce, de postes successifs, disposés les uns à la suite des autres sur le bâti machine, **caractérisé en ce que**, dans le poste d'usinage, est effectué un premier usinage avec un premier outil dans une première position de broche et un deuxième usinage avec un deuxième outil dans une deuxième position de broche, disposée sous un espacement angulaire par rapport à la première position de broche dans la direction de circulation.

35. Procédé selon la revendication 34, **caractérisé en ce que** chacun des postes est muni d'une première position de broche et d'une deuxième position de broche et les premières positions de broche et les deuxièmes positions de broche sont chacune disposées les unes au-dessous des autres sous des espacements angulaires identiques.

36. Procédé selon la revendication 34 ou 35, **caractérisé en ce qu'**une pièce est fabriquée au moyen d'un cycle de travail de pièce, qui présente au moins une succession d'étapes, avec au moins une étape de mouvement angulaire, concernant la rotation du tambour de broche.

37. Procédé selon la revendication 36, **caractérisé en ce que** le cycle de pièce comprend plusieurs successions d'étapes identiques.

38. Procédé selon la revendication 36 ou 37, **caractérisé en ce** chaque succession d'étapes comprend plusieurs étapes de mouvement angulaire de valeurs différentes.

39. Procédé selon l'une des revendications 35 à 37, **caractérisé en ce que** le cycle de travail de pièce est achevé après passage d'un nombre déterminé de postes.

40. Procédé selon l'une des revendications 36 à 39, **caractérisé en ce que** la somme des étapes de mouvement angulaire d'une succession d'étapes est un multiple entier de 360°, divisé par le nombre des broches à pièce.

41. Procédé selon l'une des revendications 36 à 40, **caractérisé en ce que**, en cas d'exécution des cycles de travail de pièce, pendant un premier intervalle de temps, ce sont les premières positions de broche qui font l'objet d'un accostage avec les broches à pièce et, ensuite, ce sont seulement les deuxièmes positions de broche qui font l'objet d'un accostage, pendant un deuxième intervalle de temps.

42. Procédé selon la revendication 41, **caractérisé en ce que** le premier intervalle de temps est déterminé par l'utilisation des outils montés aux premières positions de broche.

43. Procédé selon la revendication 41 ou 42, **caractérisé en ce que** le deuxième intervalle de temps est déterminé par l'utilisation des outils montés aux deuxièmes positions de broche.

44. Procédé selon l'une des revendications 41 à 43, **caractérisé en ce que**, après écoulement du premier intervalle de temps, une rotation du tambour de broche est effectuée pour procéder au changement de positionnement des broches à pièce, avec passage des positions en rotation, tombant sur les premières positions de broche, aux positions en rotation tombant sur les deuxièmes positions de broche.

45. Procédé selon l'une des revendications 34 à 39, **caractérisé en ce que** toutes les positions de broche se suivant en direction de circulation sont franchies les unes après les autres dans la direction de circulation par les différentes broches à pièce.

46. Procédé selon l'une des revendications 34 à 45, **caractérisé en ce que** les pièces sont usinées sur une première face et sur une deuxième face.

47. Procédé selon la revendication 46, **caractérisé en ce que**, avec au moins l'une des étapes de mouvement angulaire de la succession d'étapes, est sautée une position de broche faisant immédiatement suite en direction de circulation.

48. Procédé selon la revendication 47, **caractérisé en ce que**, avec au moins l'une des étapes de mouvement angulaire de la succession d'étapes n'est sautée que la position de broche faisant immédiatement suite dans la direction de circulation.

49. Procédé selon la revendication 47, **caractérisé en ce que**, avec l'étape de mouvement angulaire, sont sautées les deux positions de broche se faisant immédiatement suite en direction de circulation.

50. Procédé selon la revendication 47, **caractérisé en ce que**, avec l'étape de mouvement angulaire, sont sautées les trois positions de broche se faisant immédiatement suite en direction de circulation.

51. Procédé selon la revendication 47 à 50, **caractérisé en ce que** chacune des étapes de mouvement angulaire d'une succession d'étapes sert à sauter une position de broche immédiatement suivante.

52. Procédé selon l'une des revendications 47 à 50, **caractérisé en ce que**, avec l'une des étapes de mouvement angulaire, est effectué un changement, d'une position de broche à une position de broche immédiatement suivante en direction de circulation.
